(19) Europäisches Patentamt
European Patent Office
Office européen des brevets

(11) EP 4 324 857 A1

(12) # EUROPEAN PATENT APPLICATION
published in accordance with Art. 153(4) EPC

(43) Date of publication:
**21.02.2024 Bulletin 2024/08**

(21) Application number: **22803893.1**

(22) Date of filing: **13.05.2022**

(51) International Patent Classification (IPC):
***C08F 8/04*** (2006.01) ***C08F 297/04*** (2006.01)

(52) Cooperative Patent Classification (CPC):
**B01J 23/62; B01J 35/60; C08F 8/04; C08F 297/04**

(86) International application number:
**PCT/CN2022/092764**

(87) International publication number:
**WO 2022/242571 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.05.2021 CN 202110560968**

(71) Applicants:
- **China Petroleum & Chemical Corporation
Beijing 100728 (CN)**
- **Sinopec (Beijing) Research Institute of Chemical Industry Co., Ltd.
Beijing 100013 (CN)**

(72) Inventors:
- **CHEN, Jianjun
Beijing 100013 (CN)**
- **HE, Xiaojin
Beijing 100013 (CN)**
- **GAO, Nian
Beijing 100013 (CN)**
- **JI, Yuguo
Beijing 100013 (CN)**
- **WU, Ning
Beijing 100013 (CN)**
- **DU, Zhou
Beijing 100013 (CN)**
- **HAO, Jianguo
Beijing 100013 (CN)**

(74) Representative: **Hoffmann Eitle
Patent- und Rechtsanwälte PartmbB
Arabellastraße 30
81925 München (DE)**

(54) **HYDROGENATION METHOD FOR AROMATIC POLYMER AND HYDROGENATED BLOCK COPOLYMER AND USE THEREOF**

(57) Disclosed in the present invention is a hydrogenation method for an aromatic polymer. The method comprises: bringing an aromatic polymer into contact with a hydrogenation reagent in the presence of a hydrogenation catalyst so as to hydrogenate at least some aromatic rings in the aromatic polymer, wherein the hydrogenation catalyst contains a carrier and a platinum element, a group IVA element and a rare earth metal element loaded on the carrier, and the carrier is alumina. The present invention also provides hydrogenated block copolymers, hydrogenated five-block copolymers and hydrogenated seven-block copolymers. By means of the hydrogenation method provided in the invention, the aromatic ring in the aromatic polymer can be effectively hydrogenated to obtain a higher aromatic ring hydrogenation degree, the influence on the structure of the polymer is small, and the molecular chain of the aromatic polymer before and after hydrogenation reaction is essentially not degraded. The hydrogenated block copolymers of the present invention not only have high hydrogenation degree, but also have high light transmittance, low haze and excellent impact toughness.

EP 4 324 857 A1

## Description

### Cross Reference to Related Applications

This application claims the rights of the Chinese patent application 202110560968.X filed on May 19, 2021, and the content of which is incorporated herein by reference.

### Field of the Invention

The present disclosure relates to a hydrogenation method for an aromatic polymer, and further relates to a hydrogenated block copolymer, a hydrogenated five-block copolymer, and a hydrogenated seven-block copolymer and uses thereof.

### Background of the Invention

Universal unsaturated polymer materials usually contain unsaturated double bonds (such as benzene ring double bonds, and diene double bonds), which have poor heat resistance, ultraviolet light resistance, and yellowing resistance. Hydrogenation of unsaturated polymers is a fast and effective way to improve performance.

Polystyrene is currently the most widely used thermoplastic with many advantages such as water resistance, corrosion resistance, high transparency, easy coloring, and easy processing and forming, and is widely used in various fields such as electronic communication, molds, food packaging, and daily necessities. After hydrogenation of the benzene ring double bonds in polystyrene, fully-saturated poly (vinyl cyclohexane) (PVCH) is obtained. Compared with the polystyrene (PS), the fully-saturated PVCH has a significantly-increased glass transition temperature, which can be increased from around 105°C to 147°C, and meanwhile also has significantly-increased heat resistance, ultraviolet light resistance, and other properties, while maintaining high light transmittance of the PS. However, after hydrogenation, the polystyrene has insufficient toughness and is more prone to fracture. Another transparent monovinyl aromatic hydrocarbon polymer is styrene-butadiene resin, which is a styrene-butadiene block copolymer with a high styrene content. In order to improve the toughness of the styrene-butadiene resin, researchers have developed highly transparent and impact resistant styrene-butadiene resin, which combines high transparency and impact resistance. However, because of containing a large amount of unsaturated double bonds of butadiene, the styrene-butadiene resin has poor heat resistance, ultraviolet light resistance, and yellowing resistance when used outdoors.

For the hydrogenation of unsaturated double bonds of conjugated diene in the polymers, homogeneous nickel or cobalt catalyst systems or a metallocene catalyst system can be used. For the hydrogenation of unsaturated double bonds in an aromatic ring, it is more difficult than the hydrogenation of the diene double bonds, usually uses a heterogeneous catalyst, and meanwhile requires harsh process conditions such as high temperature and pressure.

For example, Elias H G and Etter O (Glass Temperature of Hydrogenated Polystyrene, Journal of Macromolecular Science-Chemistry, 1967, 1(5): 943-953) uses a Raney Ni catalyst to perform hydrogenation on polystyrene at a temperature from 200°C to 270°C and under an atm pressure from 210 to 260, a reaction lasts for 24 hours, and a hydrogenation degree may reach a range from 42% to 100%. However, the polymer is subjected to severe degradation. For another example, Gehlsen *et al.* (MD Gehlsen, Weimann P A, Bates F S, et al., Synthesis and Characterization of Poly(vinylcyclohexane) Derivatives, Journal of Polymer Science Part B Polymer Physics, 1995, 33(10): 1527-1536) uses $Pd/BaSO_4$ as a catalyst for performing hydrogenation on a cyclohexane solution of polystyrene at a temperature of 140°C and under an atm pressure of 35. A catalyst/polymer mass ratio is 2.5/1, and a reaction lasts for 12 hours to obtain fully-hydrogenated PVCH. The polymer is subjected to partial chain-scission degradation (Tg=140°C). Zhou Hongyong *et al.* (Zhou Hongyong et al., Preparation of Magnetic Nano-Ruthenium Catalyst and Catalytic Performance for Catalytic Hydrogenation of Polystyrene, Polymer Material Science and Engineering, 2011, 27(011): 73-76) supports metal Ru on a magnetic nano carrier to prepare a magnetic nano catalyst and use it for a hydrogenation reaction of polystyrene. When a reaction temperature is above 120°C, a hydrogen pressure is 8 MPa, and a reaction time is 5 hours, the hydrogenation degree of polystyrene can reach above 90%. However, after hydrogenation, polystyrene is subjected to degradation, and produces small molecules such as benzene, toluene, cyclohexane, and methylcyclohexane.

To solve a problem that the polymer is prone to degradation during polymer hydrogenation, US5700878 discloses a method for hydrogenating an aromatic polymer, including: in the presence of a metal hydrogenation catalyst with silicon dioxide as a carrier, making the aromatic polymer contacting with a hydrogenation agent to hydrogenate at least 80% of the aromatic polymer, wherein a surface area of silicon dioxide in the metal hydrogenation catalyst is at least 10 $m^2/g$, pore size distribution reaches a situation that at least 98% of pore volume is determined by pores with a pore size greater than 600 angstroms when measured using a mercury porosimeter, while for pores with a pore size less than 600 angstroms when measured using a nitrogen desorption method, the pore volume is less than 2% of a total pore volume when measured using a mercury porosimeter. However, the hydrogenation catalyst used in this method

has a large load of precious metal and the dosage of the catalyst is also large, resulting in higher cost. In addition, from experimental data of embodiments recorded in a patent specification, it can be seen that the molecular weight of the hydrogenated polymer obtained from the hydrogenation reaction of polystyrene and poly(alpha-methylstyrene) using the disclosed method shows a significant decrease compared to the unhydrogenated polymer, indicating that the hydrogenation reaction leads to polymer degradation.

Therefore, hydrogenation based on highly-transparent monovinyl aromatic hydrocarbon polymer still needs to solve problems such as low hydrogenation activity of a catalyst, easy degradation of a hydrogenation product, and inability to simultaneously consider impact toughness and heat resistance of the hydrogenation product.

## Summary of the Invention

One objective of the present disclosure is to provide a hydrogenation method for an aromatic polymer, which can not only hydrogenate an aromatic ring in the aromatic polymer, but also effectively inhibits degradation of a polymer molecular chain in a hydrogenation process.

Another objective of the present disclosure is to provide a hydrogenated block copolymer. The hydrogenated block copolymer according to the present disclosure not only has a high aromatic ring hydrogenation degree and conjugated diene hydrogenation degree, but also can achieve a good balance between transparency and impact toughness.

According to a first aspect of the present disclosure, the present disclosure provides a hydrogenation method for an aromatic polymer, the aromatic polymer comprises aromatic rings, and the method comprises: contacting the aromatic polymer with a hydrogenation reagent in the presence of a hydrogenation catalyst so as to hydrogenate at least part of aromatic rings in the aromatic polymer and obtain a hydrogenated aromatic polymer, wherein

the hydrogenation catalyst comprises a carrier and a platinum element, a group IVA element and a rare earth metal element supported on the carrier, the carrier is alumina, and in the hydrogenation catalyst, a molar ratio of the group IVA element to the platinum element is not higher than 10.

According to the second aspect of the present disclosure, the present disclosure provides a hydrogenated aromatic polymer prepared by the method described in the first aspect of the present disclosure.

According to a third aspect of the present disclosure, the present disclosure provides a hydrogenated block copolymer, the hydrogenated block copolymer contains a monovinyl aromatic hydrocarbon structural unit derived from monovinyl aromatic hydrocarbon and a conjugated diene structural unit derived from conjugated diene, in the hydrogenated block copolymer, a hydrogenation degree of an aromatic ring in the monovinyl aromatic hydrocarbon structural unit is 98 mole% or higher, a hydrogenation degree of unsaturated double bonds in the conjugated diene structural unit is 99 mole% or higher, wherein a notched impact strength of the hydrogenated block copolymer is in a range from 20 $kJ/m^2$ to 30 $kJ/m^2$, an elongation at break is in a range from 200% to 400%, a light transmittance is in a range from 88% to 92%, and a haze is in a range from 1 to 5.

According to a fourth aspect of the present disclosure, the present disclosure provides a hydrogenated five-block copolymer, wherein the five-block copolymer is a five-block copolymer with a structure shown in formula II:

S51-(S52/B51)-B52-(S53/B53)-S54 (Formula II)

in formula II, an S51 block and an S54 block are each independently homopolymerization segment of monovinyl aromatic hydrocarbon;
an S52/B51 block and an S53/B53 block are each independently random copolymerization segment of the monovinyl aromatic hydrocarbon and conjugated diene,
a B52 block is a homopolymerization segment of the conjugated diene; and
in the hydrogenated five-block copolymer, a hydrogenation degree of an aromatic ring in a monovinyl aromatic hydrocarbon structural unit is 98 mole% or higher, and a hydrogenation degree of an unsaturated double bond in a conjugated diene structural unit is 99 mole% or higher.

According to a fifth aspect of the present disclosure, the present disclosure provides a hydrogenated seven-block copolymer, wherein the block copolymer is a seven-block copolymer with a structure shown in formula III:

S71-(S72/B71)-B72-(S73/B73)-B74-(S75/B75)-S76 (Formula III)

in formula III, an S71 block and an S76 block are each independently homopolymerization segment of the monovinyl aromatic hydrocarbon;
an S72/B71 block, an S73/B73 block and an S75/B75 block are each independently random copolymerization

segment of the monovinyl aromatic hydrocarbon and the conjugated diene,

a B72 block and a B74 block are each independently homopolymerization segment of the conjugated diene; and

in the hydrogenated seven-block copolymer, a hydrogenation degree of an aromatic ring in a monovinyl aromatic hydrocarbon structural unit is 98 mole% or higher, and a hydrogenation degree of an unsaturated double bond in a conjugated diene structural unit is 99 mole% or higher.

According to a sixth aspect of the present disclosure, the present disclosure provides use of the hydrogenated block copolymer described in the third aspect of the present disclosure, the hydrogenated five-block copolymer described in the fourth aspect, or the hydrogenated seven-block copolymer described in the fifth aspect in preparation of a packaging material or an optoelectronic product.

According to the hydrogenation method for the aromatic polymer provided in the present disclosure, the aromatic ring in the aromatic polymer can be effectively hydrogenated to obtain a higher aromatic ring hydrogenation degree, the influence on the structure of the polymer is small, and the molecular chain of the aromatic polymer before and after hydrogenation reaction is essentially not degraded.

The hydrogenated block copolymer, the hydrogenated five-block copolymer, and the hydrogenated seven-block copolymer according to the present disclosure have high hydrogenation degree (the hydrogenation degree is close to 100%), not only have the characteristics of high light transmittance and low haze, but also have excellent impact toughness and heat resistance, and can achieve a good balance between the impact toughness and the heat resistance. The hydrogenated block copolymer, the hydrogenated five-block copolymer, and the hydrogenated seven-block copolymer according to the present disclosure have good commercial prospects in application fields such as packaging materials (especially packaging materials in the field of medical and health) and production of optoelectronic product materials (especially materials such as cameras and display screens of the optoelectronic products).

**Detailed Description of the Embodiments**

The specific embodiments of the present disclosure are illustrated in detail below. It should be understood that the specific embodiment described here is only used for illustrating and explaining the present disclosure and not for limiting the present disclosure.

Endpoints and any values of a range disclosed herein are not limited to the precise range or value, and these ranges or values should be understood to contain values close to these ranges or values. For numerical ranges, the endpoint values of each range, the endpoint values of each range and an individual point value, as well as individual point values, may be combined to obtain one or more new numerical ranges. These numerical ranges should be considered specifically disclosed herein.

In the present disclosure, a term "monovinyl aromatic hydrocarbon" refers to a compound formed by the substitution of hydrogen on an aromatic ring by a vinyl group. For example, the monovinyl aromatic hydrocarbon may be one or more than two selected from the group consisting of compounds shown in formula I,

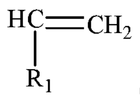

(Formula I)

In formula I, $R_1$ is a substituted or unsubstituted aromatic group from $C_6$ to $C_{20}$, and specific examples may include, but are not limited to phenyl, *o*-methylphenyl, *m*-methylphenyl, *p*-methylphenyl, *o*-ethylphenyl, *m*-ethylphenyl, *p*-ethylphenyl, *o*-tert-butylphenyl, *m*-tert-butylphenyl, *p*-tert-butylphenyl, *p*-dodecylphenyl, 2,4-di-*n*-butylphenyl, *p*-*n*-propylphenyl, and 2,4-diethylphenyl.

Preferably, the monovinyl aromatic hydrocarbon is one or more than two selected from the group consisting of styrene, 2-methyl styrene, 4-methyl styrene, 4-*tert* butyl styrene, 4-methyl styrene, 3,5-diethylstyrene, 3,5-di-*n*-butyl styrene, 4-*n*-propylstyrene, and 4-dodecylstyrene. More preferably, the monovinyl aromatic hydrocarbon is one or more than two selected from the group consisting of styrene, 2-methyl styrene, 4-methyl styrene, and $\alpha$-methyl styrene.

In the present disclosure, a term "conjugated diene" refers to unsaturated chain hydrocarbon containing a conjugated double bond (i.e. -C=C-C=C-) in a molecular structure, and may be various conjugated dienes commonly used in the art without special limitations. For example, the conjugated diene may be one or more than two selected from the group consisting of conjugated dienes from $C_4$ to $C_8$.

Preferably, the conjugated diene is one or more than two selected from the group consisting of butadiene, isoprene, 1,3-pentadiene, 1,3-hexadiene, and 2,3-dimethylbutadiene. More preferably, the conjugated diene is butadiene, isoprene, or a combination thereof.

In the present disclosure, "structural unit derived from ××××" refers to that the structural unit is formed by

addition polymerization of the monomer (i.e, ××××). For example, a structural unit derived from the monovinyl aromatic hydrocarbon refers to a structural unit formed by addition polymerization of the monovinyl aromatic hydrocarbon.

In the present disclosure, a term "content of a side group" refers to a content, based on the total amount of the structural units derived from conjugated diene, of the structural unit derived from conjugated diene and containing an olefinic-bond type side group (i.e., the side groups containing C=C bonds) in the copolymer. Specifically, when the conjugated diene is butadiene, the olefinic-bond type side group refers to a side group (represented as 1,2-PB) in a structural unit (i.e.,

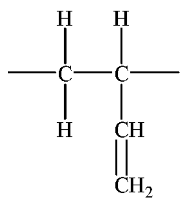

) formed by 1,2-polymerization of butadiene; and when the conjugated diene is isoprene, the olefinic-bond type side group refers to a side group in a structural unit formed by 1,2-polymerization and/or 3,4-polymerization of isoprene (the side group formed by 1,2-polymerization is represented as 1,2-IP, and the side group formed by 3,4-polymerization is represented as 3,4-IP). In the present disclosure, the content of side group of the polymer is determined by a nuclear magnetic resonance hydrogen spectroscopy.

In the present disclosure, a term "styrene non-block" (also referred to as "St non-block") refers to a content of a styrene structural unit derived from styrene in a random copolymerization segment. In the present disclosure, the content of the styrene non-block of the polymer is determined by the nuclear magnetic resonance hydrogen spectroscopy.

In the present disclosure, a term "end-block" refers to blocks located at two ends of a polymer molecular chain, which may also be referred to as the "end block"; and a term "inner-block" refers to a block that is directly bonded to the end-block, that is, the end-block and the inner-block are connected together through their respective end atoms in a mode of covalent bond.

In the present disclosure, a term "homopolymerization segment" refers to that structural units in the block are essentially from the same monomer. In the present disclosure, at least 99wt% or higher of the structural units in the homopolymerization segment are from the same monomer. In the present disclosure, a term "random copolymerization segment" refers to that structural units in the block are from two or more than two monomers, and different types of structural units are randomly distributed.

In the present disclosure, a term "bonding" refers to that the two blocks are connected together through their respective end atoms in a mode of covalent bond.

In the present disclosure, a term "hydrogenation" and a term "hydrogenization" have the same meaning, both refer to hydrogenation of carbon-carbon unsaturated bonds. The carbon-carbon unsaturated bonds include unsaturated bonds in the aromatic ring and carbon-carbon unsaturated bonds in a non-aromatic ring, such as carbon-carbon double bonds in the nonaromatic ring. In the present disclosure, a term "hydrogenation degree" and a term "hydrogenization degree" have the same meaning, which refers to a rate of change in the content of the carbon-carbon unsaturated bonds in the polymer after hydrogenation compared to the content of the carbon-carbon unsaturated bonds in the polymer before hydrogenation, and may be calculated using the following equation:

hydrogenation degree=(1 - molar content of carbon-carbon unsaturated bonds in the polymer after hydrogenation/molar content of carbon-carbon unsaturated bonds in the polymer before hydrogenation) × 100%.

A term "aromatic ring hydrogenation degree" refers to a rate of change in the content of the carbon-carbon unsaturated bonds from the aromatic ring in the polymer after hydrogenation compared to the content of the carbon-carbon unsaturated bonds from the aromatic ring in the polymer before hydrogenation, and may be calculated using the following equation:

aromatic ring hydrogenation degree=(1- molar content of carbon-carbon unsaturated bonds from the aromatic ring in the polymer after hydrogenation/molar content of carbon-carbon unsaturated bonds from the aromatic ring in the polymer before hydrogenation) × 100%.

A term "conjugated diene hydrogenation degree" refers to a rate of change in the content of carbon-carbon unsaturated double bonds from a conjugated diene structural unit in the polymer after hydrogenation compared to the content of the carbon-carbon unsaturated double bonds from the conjugated diene structural unit in the polymer before hydrogenation, and may be calculated using the following equation:

conjugated diene hydrogenation degree=(1- molar content of carbon-carbon unsaturated double bonds from conjugated diene in the polymer after hydrogenation/molar content of carbon-carbon unsaturated double bonds from conjugated diene in the polymer before hydrogenation) × 100%.

In the present disclosure, a number average molecular weight ($M_n$), a weight average molecular weight ($M_w$) and a molecular weight distribution index ($M_w/M_n$) of the polymer are measured in g/mol by a gel permeation chromatography with monodisperse polystyrene as the standard.

In the present disclosure, unless otherwise specified, the pressures are all gauge pressures.

In the present disclosure, a term "at least one" refers to one or more than two. In the present disclosure, a term "optional" indicates non essential and may be understood as "including or excluding", "containing or not containing".

## 1. Aromatic polymer

In the present disclosure, the aromatic polymer contains an aromatic ring, referring to a polymer containing a structural unit with the aromatic ring. A typical example of the aromatic ring is a benzene ring. The aromatic ring in the aromatic polymer is from an aromatic structural unit of an aromatic monomer with the aromatic ring. A typical example of the structural unit with the aromatic ring may include, but is not limited to, a monovinyl aromatic hydrocarbon structural unit derived from monovinyl aromatic hydrocarbon.

Based on the total amount of the aromatic polymer, a content of the aromatic structural unit derived from the aromatic monomer with the aromatic ring in the aromatic polymer may be 40wt% or higher, preferably 50wt% or higher, and more preferably 70wt% or higher. In a preferred embodiment, based on the total amount of the aromatic polymer, a content of the aromatic structural unit in the aromatic polymer is in a range from 65wt% to 85wt%, such as 65wt%, 66wt%, 67wt%, 68wt%, 69wt%, 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, or 85wt%.

The aromatic polymer may only comprise the aromatic structural unit, and may also comprise the aromatic structural unit and non-aromatic structural unit without the aromatic ring. The non-aromatic structural unit may be selected from a structural unit containing unsaturated bonds and a structural unit without unsaturated bonds. A typical example of the non-aromatic structural unit includes a conjugated diene structural unit derived from conjugated diene.

When the aromatic polymer comprises the conjugated diene structural unit, based on the total amount of the aromatic polymer, a content of the conjugated diene structural unit is preferably not higher than 60wt%, for example, it may be in a range from 5wt% to 60wt%. More preferably, based on the total amount of the aromatic polymer, a content of the conjugated diene structural unit is not higher than 50wt%, for example, it may be in a range from 10wt% to 50wt%. Further preferably, based on the total amount of the aromatic polymer, a content of the conjugated diene structural unit is in a range from 15wt% to 35wt%, such as 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, 31wt%, 32wt%, 33wt%, 34wt% or 35wt%. The conjugated diene is preferably butadiene and/or isoprene. When the aromatic polymer comprises the conjugated diene structural unit derived from the conjugated diene, based on the total amount of the conjugated diene structural unit derived from the conjugated diene, the content of the side group is preferably in a range from 40wt% to 60wt%, such as 40wt%, 41wt%, 42wt%, 43wt%, 44wt%, 45wt%, 46wt%, 47wt%, 48wt%, 49wt%, 50wt%, 51wt%, 52wt%, 53wt%, 54wt%, 55wt%, 56wt%, 57wt%, 58wt%, 59wt%, or 60wt%.

When the aromatic polymer comprises the conjugated diene structural unit, an arrangement order of the aromatic structural unit and the conjugated diene structural unit in the polymer molecular chain may be selected according to the specific usage requirements of the hydrogenated aromatic polymer, and may be random, block or graft.

In a preferred embodiment, the aromatic polymer is a block copolymer and comprises a structural unit derived from monovinyl aromatic hydrocarbon and a structural unit derived from conjugated diene, wherein the aromatic polymer comprises at least two homopolymerization segments of monovinyl aromatic hydrocarbon (namely, the homopolymerization segment essentially formed by polymerization of the monovinyl aromatic hydrocarbon), at least one homopolymerization segment of conjugated diene (namely, the homopolymerization segment essentially formed by polymerization of the conjugated diene), and at least two random copolymerization segments of the monovinyl aromatic hydrocarbon and the conjugated diene (namely, the random copolymerization segment formed by random copolymerization of the monovinyl aromatic hydrocarbon and the conjugated diene), two end-blocks of the aromatic polymer are each independently homopolymerization segment of the monovinyl aromatic hydrocarbon, blocks directly bonded to the end-blocks is inner-blocks, and the inner-blocks are each independently the random copolymerization segment of the monovinyl aromatic hydrocarbon and the conjugated diene. When the block copolymer comprises the at least three random copolymerization segments of the monovinyl aromatic hydrocarbon and the conjugated diene and at least two homopolymerization segments of the conjugated diene, the homopolymerization segment of the conjugated diene is arranged at intervals with the random copolymerization segment of the monovinyl aromatic hydrocarbon and the conjugated diene, and two end-groups of the homopolymerization segment of the conjugated diene are each directly bonded to the random copolymerization segment of one monovinyl aromatic hydrocarbon and conjugated diene.

In the preferred embodiment, based on the total amount of the aromatic polymer, the content of the structural unit derived from the monovinyl aromatic hydrocarbon may be in a range from 40wt% to 95wt%, and the content of the structural unit derived from the conjugated diene may be in a range from 5wt% to 60wt%. Based on the total amount of the structural unit derived from the monovinyl aromatic hydrocarbon in the aromatic polymer, the content of the structural unit derived from the monovinyl aromatic hydrocarbon in the random copolymerization segment may be in a range from 15wt% to 20wt%, preferably in a range from 17wt% to 18.5wt%. In the preferred embodiment, in the aromatic polymer, based on the total amount of the conjugated diene structural unit, a content of a side group may be in a range from 40wt% to 60wt%.

In the preferred embodiment, the conjugated diene structural unit in the homopolymerization segment of the conjugated diene and the conjugated diene structural unit in the random copolymerization segment may be the same or different. Preferably, the homopolymerization segment of the conjugated diene comprises a homopolymerization segment of a first conjugated diene and at least one homopolymerization segment of a second conjugated diene, a structural unit in the homopolymerization segment of the first conjugated diene is derived from the first conjugated diene, a structural unit in the homopolymerization segment of the second conjugated diene is derived from the second conjugated diene, and the first conjugated diene is different from the second conjugated diene. More preferably, the homopolymerization segment of the first conjugated diene is directly bonded to one inner-block, the first conjugated diene is isoprene, and the second conjugated diene and the conjugated diene in the random copolymerization segment of the monovinyl aromatic hydrocarbon and the conjugated diene is butadiene. Based on the total amount of the hydrogenated block copolymer, a content of an isoprene structural unit derived from isoprene is preferably in a range from 0.5wt% to 10wt%, more preferably in a range from 1wt% to 5wt%, and further preferably in a range from 2wt% to 4wt%; and a content of a butadiene structural unit derived from butadiene is preferably in a range from 5wt% to 40wt%, more preferably in a range from 10wt% to 35wt%, and further preferably in a range from 15wt% to 30wt%.

In a more preferred embodiment, the aromatic polymer is a five-block copolymer with a structure shown in formula II:

S51-(S52/B51)-B52-(S53/B53)-S54 (Formula II)

In formula II, an S51 block and an S54 block are end-blocks, and are each independently homopolymerization segment of monovinyl aromatic hydrocarbon; an S52/B51 block and an S53B53 block are inner-blocks, and are each independently random copolymerization segment of monovinyl aromatic hydrocarbon and conjugated diene; and a B52 block is a homopolymerization segment of the conjugated diene.

In the five-block copolymer shown in formula II, monovinyl aromatic hydrocarbon structural units in the S51 block, the S52/B51 block, the S53/B53 block, and an S54 block are respectively represented as an S51 monovinyl aromatic hydrocarbon structural unit, an S52 monovinyl aromatic hydrocarbon structural unit, an S53 monovinyl aromatic hydrocarbon structural unit, and an S54 monovinyl aromatic hydrocarbon structural unit, which can be the same or different, and each can be one or more than two selected from the group consisting of styrene, 2-methylstyrene, 4-methylstyrene and $\alpha$-methylstyrene. Preferably, the monovinyl aromatic hydrocarbon structural units in the S51 block, the S52/B51 block, the S53/B53 block, and the S54 block are the same, and are all styrene structural units derived from styrene. In formula II, when the monovinyl aromatic hydrocarbon structural units in the S51 block, the S52/B51 block, the S53/B53 block, and the S54 block are all styrene structural units derived from styrene, based on the total amount of the styrene structural units in the hydrogenated block copolymer, a content of a styrene non-block is preferably in a range from 15wt% to 20wt%, more preferably in a range from 17wt% to 18.5wt%.

In the five-block copolymer shown in formula II, the conjugated diene structural unit in the B52 block is derived from B52 conjugated diene, the conjugated diene structural unit in the S52/B51 block is derived from B51 conjugated diene, the conjugated diene structural unit in the S53/B53 block is derived from B53 conjugated diene, the B52 conjugated diene, the B51 conjugated diene, and the B53 conjugated diene may be the same or different, and may be at least one selected from the group consisting of butadiene, isoprene, 1,3-pentadiene, 1,3-hexadiene, and 2,3-dimethylbutadiene. Preferably, the B52 conjugated diene is different from the B51 conjugated diene and the B53 conjugated diene, and the B51 conjugated diene is preferably the same as the B53 conjugated diene.

More preferably, the B52 conjugated diene is isoprene, and the B51 conjugated diene and the B53 conjugated diene are butadiene. Based on the total amount of the five-lock copolymer, a content of an isoprene structural unit derived from isoprene is preferably in a range from 0.5wt% to 10wt%, more preferably in a range from 1wt% to 5wt%, and further preferably in a range from 2wt% to 4wt%; and a content of a butadiene structural unit derived from butadiene is preferably in a range from 5wt% to 40wt%, more preferably in a range from 10wt% to 35wt%, and further preferably in a range from 15wt% to 30wt%. Based on the total amount of the isoprene structural unit derived from isoprene in the five-block copolymer, a content of an isoprene structural unit with a vinyl side group (namely, a content of the side group) is preferably in a range from 50wt% to 60wt%, and more preferably in a range from 50wt% to 57wt%. Based on the total amount of the structural unit derived from butadiene in the five-block copolymer, a content of a butadiene structural unit with the vinyl side group (namely, the content of the side group) is preferably in a range from 40wt% to 60wt%, and more preferably in a range from 45wt% to 55wt%.

Based on the total amount of the five-lock copolymer shown in formula II, a content of a monovinyl aromatic hydrocarbon structural unit derived from monovinyl aromatic hydrocarbon is preferably in a range from 40wt% to 95wt%, more preferably in a range from 50wt% to 90wt%, and further preferably in a range from 65wt% to 85wt%; and a content of a conjugated diene structural unit derived from conjugated diene is preferably in a range from 5wt% to 60wt%, more preferably in a range from 10wt% to 50wt%, and further preferably in a range from 15wt% to 35wt%. The monovinyl aromatic hydrocarbon structural unit comprises the monovinyl aromatic hydrocarbon structural unit in the S51 block, the monovinyl aromatic hydrocarbon structural unit in the S54 block, the monovinyl aromatic hydrocarbon structural unit in the S52/B51 block, and the monovinyl aromatic hydrocarbon structural unit in the S53/B53 block; and the conjugated diene structural unit includes the conjugated diene structural unit in the S52/B51 block, the conjugated diene structural unit in the B52 block, and the conjugated diene structural unit in the S53/B53 block.

In the five-block copolymer shown in formula II, a number average molecular weight of the S51 block is preferably in a range from 5000 to 50000, a number average molecular weight of the S52/B51 block is preferably in a range from 20000 to 50000, a number average molecular weight of the S53/B53 block is preferably in a range from 20000 to 50000, and a number average molecular weight of the B52 block is preferably in a range from 2000 to 20000. In the aromatic polymer shown in formula II, a ratio of the number average molecular weight of the S51 block to the number average molecular weight of the S54 block is preferably 1:(2-10), more preferably 1:(2-6). In the five-block copolymer shown in formula II, a ratio of the number average molecular weight of the S52/B51 block to the number average molecular weight of the S53/B53 block is preferably 1:(0.9-1.25).

A number average molecular weight of the five-block copolymer shown in formula II is preferably in a range from 50000 to 220000, and more preferably in a range from 80000 to 200000. A molecular weight distribution index ($M_w/M_n$) of the five-block copolymer shown in formula II is preferably in a range from 1.05 to 1.2.

In another more preferred embodiment, the aromatic polymer is a seven-block copolymer with a structure shown in formula III:

S71-(S72/B71)-B72-(S73/B73)-B74-(S75/B75)-S76 (Formula III)

In formula III, an S71 block and an S76 block are end-blocks, and are each independently homopolymerization segment of monovinyl aromatic hydrocarbon; an S72/B71 block, an S73/B73 block and an S75/B75 block are each independently random copolymerization segment of monovinyl aromatic hydrocarbon and conjugated diene, wherein the S72/B71 block and the S75B75 block are inner-blocks, and the B72 block and the B74 block are each independently homopolymerization segment of the conjugated diene.

In the seven-block copolymer shown in formula III, monovinyl aromatic hydrocarbon structural units in the S71 block, the S72/B71 block, the S73/B73 block, the S75/B75 block and the S76 block are respectively represented as an S71 monovinyl aromatic hydrocarbon structural unit, an S72 monovinyl aromatic hydrocarbon structural unit, an S73 monovinyl aromatic hydrocarbon structural unit, and an S75 monovinyl aromatic hydrocarbon structural unit, which can be the same or different, and each can be one or more than two selected from the group consisting of styrene, 2-methylstyrene, 4-methylstyrene and $\alpha$-methylstyrene. Preferably, the monovinyl aromatic hydrocarbon structural units in the S71 block, the S72/B71 block, the S73/B73 block, the S75/B75 block and the S76 block are the same, and are all styrene structural units derived from styrene. In the seven-block copolymer shown in formula III, when the monovinyl aromatic hydrocarbon structural units in the S71 block, the S72/B71 block, the S73/B73 block, the S75/B75 block and

the S76 block are all styrene structural units derived from styrene, based on the total amount of the styrene structural units in the seven-block copolymer, a content of a styrene non-block is preferably in a range from 15wt% to 20wt%, more preferably in a range from 17wt% to 18.5wt%.

In the seven-block copolymer shown in formula III, the conjugated diene structural unit in the B72 block is derived from B72 conjugated diene, the conjugated diene structural unit in the S72/B71 block is derived from B71 conjugated diene, the conjugated diene structural unit in the S73/B73 block is derived from B73 conjugated diene, the conjugated diene structural unit in the B74 block is derived from B74 conjugated diene, the conjugated diene structural unit in the S75B75 block is derived from B75 conjugated diene, the B72 conjugated diene, the B71 conjugated diene, the B73 conjugated diene, the B74 conjugated diene and the B75 conjugated diene may be the same or different, and may be at least one selected from the group consisting of butadiene, isoprene, 1,3-pentadiene, 1,3-hexadiene, and 2,3-dimethylbutadiene. Preferably, the B72 conjugated diene is different from the B71 conjugated diene, the B73 conjugated diene, the B74 conjugated diene, and the B75 conjugated diene. The B71 conjugated diene, the B73 conjugated diene, the B74 conjugated diene, and the B75 conjugated diene are preferably the same.

More preferably, in the seven-block copolymer shown in formula III, the B72 conjugated diene is isoprene, and the B71 conjugated diene, the B73 conjugated diene, the B74 conjugated diene and the B75 conjugated diene are butadiene. Based on the total amount of the seven-lock copolymer, a content of an isoprene structural unit derived from isoprene is preferably in a range from 0.5wt% to 10wt%, more preferably in a range from 1wt% to 5wt%, and further preferably in a range from 2wt% to 4wt%; and a content of a butadiene structural unit derived from butadiene is preferably in a range from 5wt% to 40wt%, more preferably in a range from 10wt% to 35wt%, and further preferably in a range from 15wt% to 30wt%. Further preferably, based on the total amount of the structural unit derived from isoprene in the aromatic polymer, a content of an isoprene structural unit with a vinyl side group is preferably in a range from 40wt% to 60wt%, and more preferably in a range from 45wt% to 55wt%; and based on the total amount of the structural unit derived from butadiene in the aromatic polymer, a content of the butadiene structural unit with the vinyl side group is preferably in a range from 40wt% to 60wt%, and more preferably in a range from 45wt% to 55wt%.

In the seven-lock copolymer shown in formula III, based on the total amount of the aromatic polymer, a content of a monovinyl aromatic hydrocarbon structural unit derived from monovinyl aromatic hydrocarbon is preferably in a range from 40wt% to 95wt%, more preferably in a range from 50wt% to 90wt%, and further preferably in a range from 65wt% to 85wt%; and a content of a conjugated diene structural unit derived from conjugated diene is preferably in a range from 5wt% to 60wt%, more preferably in a range from 10wt% to 50wt%, and further preferably in a range from 15wt% to 35wt%. The monovinyl aromatic hydrocarbon structural unit includes the monovinyl aromatic hydrocarbon structural unit in the S71 block, the monovinyl aromatic hydrocarbon structural unit in the S76 block, the monovinyl aromatic hydrocarbon structural unit in the S72/B71 block, the monovinyl aromatic hydrocarbon structural unit in the S73B73 block and the monovinyl aromatic hydrocarbon structural unit in the S75B75 block; and the conjugated diene structural unit includes the conjugated diene structural unit in the S72/B71 block, the conjugated diene structural unit in the B72 block, the conjugated diene structural unit in the S73/B73 block, the conjugated diene structural unit in the B74 block and the conjugated diene structural unit in the S75B75 block.

In the seven-block copolymer shown in formula III, a number average molecular weight of the S71 block is preferably in a range from 5000 to 50000, a number average molecular weight of the S72/B71 block is preferably in a range from 20000 to 50000, a number average molecular weight of the B72 block is preferably in a range from 2000 to 20000, a number average molecular weight of the S73/B73 block is preferably in a range from 5000 to 50000, a number average molecular weight of the B74 block is preferably in a range from 2000 to 20000, a number average molecular weight of the S75/B75 block is preferably in a range from 5000 to 50000, and a number average molecular weight of the B76 block is preferably in a range from 10000 to 50000. In the seven-block copolymer shown in formula III, a ratio of the number average molecular weight of the S71 block to the number average molecular weight of the S76 block is preferably 1:(1.5-5), more preferably 1:(1.6-3). In the seven-block copolymer shown in formula III, a ratio of the number average molecular weight of the S72B71 block, the number average molecular weight of the S73B73 block, and the number average molecular weight of the S75/B75 block is preferably 1:(1-1.2):(1-1.25). In the seven-block copolymer shown in formula III, a ratio of the number average molecular weight of the B72 block to the number average molecular weight of the B74 block is preferably 1:(0.9-1.2).

In the seven-block copolymer shown in formula III, a number average molecular weight ($M_n$) of the seven-block copolymer is preferably in a range from 50000 to 200000, and more preferably in a range from 120000 to 190000. A molecular weight distribution index ($M_w/M_n$) of the seven-block copolymer is preferably in a range from 1.05 to 1.2.

The aromatic polymer may be prepared using a conventional method.

When the aromatic polymer is a block copolymer, an anionic polymerization method may be used to prepare it by sequentially adding monomers. Specifically, the block copolymer may be obtained by sequentially adding polymerization monomers in a solution comprising an organic lithium initiator and an optional polarity regulator under an anionic polymerization condition.

The organic lithium initiator may be various organic lithium initiators that can initiate the polymerization of the

polymerization monomers and are commonly used in the field of anionic polymerization. The organic lithium initiator is preferably an organic elemental lithium compound, more preferably a compound shown in formula IV,

$R_2Li$ (Formula IV)

In formula IV, $R_2$ is an alkyl from $C_1$ to $C_{10}$, such as methyl, ethyl, n-propyl, isopropyl, n-butyl, sec-butyl, isobutyl, tert-butyl, n-pentyl, isopentyl, tert-pentyl, neopentyl, hexyl (including various isomers of hexyl), heptyl (including various isomers of heptyl), octyl (including various isomers of octyl), nonyl (including various isomers of nonyl) or decyl (including various isomers of decyl).

Specific examples of the organic lithium initiator may include, but are not limited to: one or more than two selected from the group consisting of ethyl lithium, *n*-propyl lithium, isopropyl lithium, *n*-butyl lithium, *sec*-butyl lithium, *tert*-butyl lithium, and isobutyl lithium.

Preferably, the organic lithium initiator is one or more than two selected from the group consisting of *n*-butyl lithium, *sec*-butyl lithium, isobutyl lithium, and *tert*-butyl lithium. More preferably, the organic lithium initiator is n-butyl lithium.

The use amount of the organic lithium initiator may be determined according to an expected molecular weight of a first block (i.e., as a starting end block) of the block copolymer. Generally, compared to 1 g of monomers used to form the first block, the use amount of the organic lithium initiator may be in a range from 0.03 mmol to 0.2mmol (millimole), preferably in a range from 0.04 mmol to 0.15 mmol.

The polarity regulator may be a compound with oxygen atoms, nitrogen atoms, sulfur atoms, or phosphorus atoms in a molecular structure. The polarity regulator is preferably at least one selected from the group consisting of ether, dibutyl ether, tetrahydrofuran, ethylene glycol dimethyl ether, diethylene glycol dimethyl ether, dioxane, crown ether, tetrahydrofuryl ethyl ether, triethylamine, tetramethylethylenediamine, hexamethylphosphoryl triamine, potassium *tert*-butanol, potassium *tert*-pentanol, potassium lauryl alcohol, potassium alkylbenzenesulfonate, and sodium alkylbenzenesulfonate. The use amount of the polarity regulator may be appropriately selected according to specific polymerization conditions. Generally, a molar ratio of the polarity regulator to the organic lithium initiator may be (0.1-40):1, preferably (0.2-20): 1, and the organic lithium initiator is calculated based on a lithium element.

The block copolymer preferably adopts solution polymerization. According to present disclosure, there is no specifically limit the type of solvents used for solution polymerization. The solvent may be a commonly used solvent in solution polymerization, as long as the solvent is liquid under a polymerization reaction condition and inert (i.e., does not participate in the polymerization reaction or react with the polymer resulting from the reaction). Preferably, the solvent is at least one selected from the group consisting of cyclohexane, methylcyclohexane, *n*-hexane, cyclooctane, cyclohexane, acetone, *n*-butanone, decalin, and tetrahydrofuran. The use amount of the solvent may be selected according to the amount of the polymerized monomers. Generally, the use amount of the solvent makes that the monomer concentration is in a range from 5wt% to 40wt%.

When preparing the block copolymer, the adding order of the monomers is determined according to the expected sequence structure of each block in the block copolymer. Taking the five-block copolymer mentioned earlier as an example, the five-block copolymer may be prepared using a method that includes the following steps:

(5-1) under an anionic polymerization condition, in the presence of at least one solvent, S51 monovinyl aromatic hydrocarbon is brought into contact with an organic lithium initiator and a polarity regulator for a homopolymerization reaction, so as to form a reaction mixture comprising an S51 block;

(5-2) under the anionic polymerization condition, S52 monovinyl aromatic hydrocarbon and B51 conjugated diene are added to the reaction mixture comprising the S51 block for a random copolymerization reaction, so as to obtain a reaction mixture comprising the S51 block and an S52B51 block;

(5-3) under the anionic polymerization condition, B52 conjugated diene is added to the reaction mixture comprising the S51 block and the S52B51 block for a homopolymerization reaction, so as to obtain a reaction mixture comprising the S51 block, the S52B51 block and a B52 block;

(5-4) under the anionic polymerization condition, S53 monovinyl aromatic hydrocarbon and B53 conjugated diene are added to the reaction mixture comprising the S51 block, the S52B51 block and the B52 block for a random copolymerization reaction, so as to obtain a reaction mixture comprising the S51 block, the S52/B51 block, the B52 block and an S53/B53 block; and

(5-5) under the anionic polymerization condition, S54 monovinyl aromatic hydrocarbon is added to the reaction mixture comprising the S51 block, the S52/B51 block, the B52 block and the S53/B53 block for a homopolymerization reaction, so as to obtain a reaction mixture comprising the five-block copolymer.

The polymerization reaction may be performed under a conventional anionic polymerization condition. Generally, a temperature of each polymerization reaction step may be in a range from 40°C to 90°C. The temperature of each

polymerization reaction step may be the same or different. Preferably, the temperature of each polymerization reaction step is the same, that is, each polymerization reaction step is performed at the same temperature. According to a preparation method of the present disclosure, a duration of each polymerization reaction step is determined to enable all or substantially all of the monomers added in the step to react, and a conversion rate of monomers in each polymerization reaction step is usually 99% or higher. Generally, a duration of each polymerization reaction step may be in a range from 0.5 h to 1.2 h.

After the final polymerization reaction step is completed, at least one terminating agent may be added to terminate an active chain. The terminating agent may be various substances that can terminate the active chain and are commonly used in the field of anionic polymerization, for example, it may be at least one selected from the group consisting of water, alcohol, and acid. The terminating agent is at least one preferably selected from the group consisting of isopropanol, methanol, and water. The present disclosure has no specific limit on the use amount of a polymerization terminator, as long as the amount of the polymerization terminator is sufficient to deactivate an active center. In an actual operation, the use amount of the polymerization terminating agent may be determined according to the amount of the anionic polymerization initiator.

The obtained reaction mixture can be purified and separated using a conventional method to obtain the block copolymer. Specifically, the obtained reaction mixture may be subjected to centrifugal separation, filtered, decanted, or condensed in hot water to obtain the block copolymer; or the obtained mixture may also be stripped to remove the solvent and obtain the block copolymer.

A person in the art understands that the seven-block copolymer mentioned earlier may be prepared by adding a random copolymerization reaction step and a homopolymerization reaction step in sequence on the basis of the preparation method of the five-block copolymer. Herein will not provide a detailed explanation of the specific preparation method of the seven-block copolymer.

The aromatic polymer may comprise one or more than two additives. The additive may include an anti-aging agent. The present disclosure does not have particular limitations on the type of the anti-aging agent and may be various conventional anti-aging agents in the art. For example, the anti-aging agent may be a phenolic and/or amine anti-aging agent. Specifically, the anti-aging agent may be one or more than two selected from the group consisting of 4,6-dioctylthiomethyl-cresol, pentaerythritol tetrakis(3-(3,5-di-*tert*-butyl-4-hydroxyphenyl)propionate), tris(2,4-di *tert*-butylphenyl) phosphite, octadecyl 3-(3,5-di-*tert*-butyl-4-hydroxyphenyl)propionate, 2,6-butylated hydroxytoluene, *tert*-butyl catechol, and 2,2'-methylenebis(6-*tert*-butyl-4-methylphenol). When pentaerythritol tetrakis(3-(3,5-di-*tert*-butyl-4-hydroxyphenyl)propionate) and tris(2,4-di *tert*-butylphenyl) phosphite are mixed for use, a content of tris(2,4-di *tert*-butylphenyl) phosphite is preferably not higher than 50wt%; and when octadecyl 3-(3,5-di-*tert*-butyl-4-hydroxyphenyl)propionate and tris(2,4-di *tert*-butylphenyl) phosphite are mixed for use, a content of tris(2,4-di *tert*-butylphenyl) phosphite is preferably not higher than 50wt%. The use amount of the anti-aging agent may be a conventional use amount in this field. For example, based on 100 parts by weight of aromatic polymers, the use amount of the anti-aging agent may be in a range from 0.005 part by weight to 2 parts by weight, preferably in a range from 0.1 part by weight to 1 part by weight.

## 2. Hydrogenation method

A hydrogenation method for an aromatic polymer according to the present disclosure comprises: contacting the aromatic polymer with a hydrogenation reagent in the presence of a hydrogenation catalyst so as to hydrogenate at least part of aromatic rings in the aromatic polymer and obtain a hydrogenated aromatic polymer.

The hydrogenation catalyst comprises a carrier and a platinum element, a group IVA element and a rare earth metal element supported on the carrier, and the carrier is alumina.

In the hydrogenation catalyst, by elements, a molar ratio of the group IVA element to the platinum element is not higher than 10, preferably not higher than 8. In the hydrogenation catalyst, by elements, the molar ratio of the group IVA element to the platinum element is not lower than 1. In a preferred embodiment, in the hydrogenation catalyst, by elements, the molar ratio of the IVA group element to the platinum element is (3-7):1, such as: 3:1, 3.1:1, 3.2:1, 3.3:1, 3.4:1, 3.5:1, 3.6:1, 3.7:1, 3.8:1, 3.9:1, 4:1, 4.1:1, 4.2:1, 4.3:1, 4.4:1, 4.5:1, 4.6:1, 4.7:1, 4.8:1, 4.9:1, 5:1, 5.1:1, 5.2:1, 5.3:1, 5.4:1, 5.5:1, 5.6:1, 5.7:1, 5.8:1, 5.9:1, 6:1, 6.1:1, 6.2:1, 6.3:1, 6.4:1, 6.5:1, 6.6:1, 6.7:1 6.8:1, 6.9:1 or 7:1. The IVA group element may be at least one element selected from the group consisting of carbon (C), silicon (Si), germanium (Ge), tin (Sn), and lead (Pb), preferably at least one element selected from the group consisting of Si, Ge and Sn. In a particularly preferred embodiment, the group IVA element is Sn.

In the hydrogenation catalyst, by elements, a molar ratio of the rare earth metal element to the platinum element is preferably (1-6):1, for example, it may be: 1:1, 1.1:1, 1.2:1, 1.3:1, 1.4:1, 1.5:1, 1.6:1, 1.7:1, 1.8:1, 1.9:1, 2:1, 2.1:1, 2.2:1, 2.3:1, 2.4:1, 2.5:1, 2.6:1, 2.7:1, 2.8:1, 2.9:1, 3:1, 3.1:1, 3.2:1, 3.3:1, 3.4:1, 3.5:1, 3.6:1, 3.7:1, 3.8:1, 3.9:1, 4:1, 4.1:1, 4.2:1, 4.3:1, 4.4:1, 4.5:1, 4.6:1, 4.7:1, 4.8:1, 4.9:1, 5:1, 5.1:1, 5.2:1, 5.3:1, 5.4:1, 5.5:1, 5.6:1 5.7:1, 5.8:1, 5.9:1 or 6:1. Preferably, by elements, the molar ratio of the rare earth metal element to the platinum element is (1.5-5):1. The rare earth metal element may be at least one element selected from the group consisting of La, Ce, Pr, Nd, Sm, Eu, Gd,

Tb, Dy, Ho, Er, Tm, Yb, and Lu, preferably at least one element selected from the group consisting of La, Ce, and Pr, and more preferably La, Ce, or a combination thereof. In a particularly preferred embodiment, the rare earth metal element is Ce.

In a preferred embodiment, the hydrogenation catalyst further comprises an alkali metal element and an alkaline earth metal element. The alkali metal element may be at least one element selected from the group consisting of lithium (Li), sodium (Na), potassium (K), rubidium (Rb), and cesium (Cs), preferably at least one element selected from the group consisting of Li, Na, and K, more preferably K. The alkaline earth metal element may be at least one element selected from the group consisting of beryllium (Be), magnesium (Mg), calcium (Ca), strontium (Sr), and barium (Ba), preferably Mg, Ca or a combination thereof, more preferably Mg. In the preferred embodiment, in the hydrogenation catalyst, by elements, the molar ratio of the alkali metal element to the platinum element is preferably (7-20):1, for example, it may be 7:1, 7.5:1, 8:1, 8.5:1, 9:1, 9.5:1, 10:1, 10.5:1, 11:1, 11.5:1, 12:1, 12.5:1, 13:1, 13.5:1, 14:1, 14.5:1, 15:1, 15.5:1, 16:1, 16.5:1, 17:1, 17.5:1, 18:1, 18.5:1, 19:1, 19.5:1 or 20:1. In the preferred embodiment, in the hydrogenation catalyst, by elements, the molar ratio of the rare earth metal element to the platinum element is preferably (10-35):1, for example, it may be: 10:1, 10.5:1, 11:1, 11.5:1, 12:1, 12.5:1, 13:1, 13.5:1, 14:1, 14.5:1, 15:1, 15.5:1, 16:1, 16.5:1, 17:1, 17.5:1, 18:1, 18.5:1, 19:1, 19.5:1, 20:1, 20.5:1, 21:1, 21.5:1, 22:1, 22.5:1, 23:1, 23.5:1, 24:1, 24.5:1, 25:1, 25.5:1, 26:1, 26.5:1, 27:1, 27.5:1, 28:1, 28.5:1, 29:1, 29.5:1, 30:1, 30.5:1, 31:1, 31.5:1, 32:1, 32.5:1, 33:1 33.5:1, 34:1, 34.5:1 or 35:1.

In a preferred embodiment, the hydrogenation catalyst further comprises a group IVB metal element, a halogen group element, or a combination thereof. The group IVB metal element may be titanium (Ti), zirconium (Zr) or a combination thereof, preferably Zr. The halogen group element may be at least one element selected from the group consisting of fluorine (F), chlorine (Cl), bromine (Br), and iodine (I), preferably Cl. In the preferred embodiment, in the hydrogenation catalyst, by elements, the molar ratio of the group IVB metal element to the platinum element is preferably (2-10):1, such as 2:1, 2.5:1, 3:1, 3.5:1, 4:1, 4.5:1, 5:1, 5.5:1, 6:1, 6.5:1, 7:1, 7.5:1, 8:1, 8.5:1, 9:1, 9.5:1 or 10:1. In the preferred embodiment, in the hydrogenation catalyst, by elements, the molar ratio of the group IVB element to the platinum element is preferably (4-6):1. In the preferred embodiment, in the hydrogenation catalyst, by elements, the molar ratio of the halogen group element to the platinum element is preferably (2-8):1, such as 2:1, 2.5:1, 3:1, 3.5:1, 4:1, 4.5:1, 5:1, 5.5:1, 6:1, 6.5:1, 7:1, 7.5:1 or 8:1. In the preferred embodiment, in the hydrogenation catalyst, by elements, the molar ratio of the halogen group element to the platinum element is more preferably (4-6):1.

In a particularly preferred embodiment, the hydrogenation catalyst comprises a platinum element, a group IVA element, a group IVB metal element, a rare earth metal element, a halogen group element, an alkali metal element, and an alkaline earth metal element. The group IVA element is Sn, the group IVB metal element is Zr, the rare earth metal element is Ce, the halogen group element is Cl, and the alkali metal element is K, and the alkaline earth metal element is Mg.

Based on the total amount of the hydrogenation catalyst, a content of the platinum element may be in a range from 0.1wt% to 0.8wt%, for example, it may be 0.1wt%, 0.2wt%, 0.3wt%, 0.4wt%, 0.5wt%, 0.6wt%, 0.7wt%, or 0.8wt%, and the platinum element is calculated by an element. Preferably, based on the total amount of the hydrogenation catalyst, a content of the platinum element is in a range from 0.2wt% to 0.8wt%, and the platinum element is calculated by the element.

In the hydrogenation catalysts, the alumina is preferably $\gamma$-alumina.

A specific surface area of the hydrogenation catalyst is preferably in a range from 100 $m^2/g$ to 400 $m^2/g$, more preferably in a range from 200 $m^2/g$ to 350 $m^2/g$, further preferably in a range from 250 $m^2/g$ to 320 $m^2/g$. An average pore size of the hydrogenation catalyst is preferably in a range from 5 nm to 40 nm, more preferably in a range from 10 nm to 20nm, and further preferably in a range from 15 nm to 20 nm.

The hydrogenation catalyst may be obtained by supporting each component in the catalyst on the carrier and optionally calcining it. A conventional method may be used to support each component in the catalyst on the carrier, for example, by using a liquid phase method to support each component in the catalyst on the carrier. Specific examples of the liquid phase method may include, but are not limited to one or a combination of more than two of an impregnation method and a spray method.

Each component in the hydrogenation catalyst may be supported on the carrier through two or more loading steps, or all components in the hydrogenation catalyst may be simultaneously supported on the carrier. In a preferred embodiment, each component in the hydrogenation catalyst is supported on the carrier through two or more supporting steps. In the preferred embodiment, the rare earth metal element is preferably supported on the carrier firstly, and then the platinum element and the group IVA element are supported on the carrier. When the hydrogenation catalyst comprises the group IVB metal element, the halogen group element, or a combination thereof, the group IVB metal element, the halogen group element, or the combination thereof are preferably supported on the carrier simultaneously with the platinum element and the group IVA element. When the hydrogenation catalyst comprises the alkali metal element and the alkaline earth metal element, the alkali metal element and the alkaline earth metal element are preferably supported on the carrier comprising the rare earth metal element before supporting the platinum element and the group IVA element.

When using the liquid phase method to support each component in the catalyst, the carrier may be dried after supporting to remove a liquid phase supported on the carrier. A drying temperature may be in a range from 50°C to 200°C, preferably in a range from 80°C to 150°C; and a duration of the drying process may be in a range from 1 h to 10 h, preferably in a range from 2 h to 8 h. Drying may be performed under a normal pressure (i.e. 1 standard atmospheric pressure) or under a condition of reducing the pressure. The drying may be performed in an oxidizing atmosphere (such as an air atmosphere), or in a non-active atmosphere (such as an atmosphere formed by one or a combination of more than two of nitrogen, argon, and helium).

When preparing the hydrogenation catalyst, after supporting is completed, calcining may be performed or not, preferably calcining is performed. Calcining may be performed under a conventional condition. Specifically, a calcining temperature may be in a range from 400°C to 650°C, preferably in a range from 400°C to 600°C; and a duration of calcining may be in a range from 1 h to 10 h, preferably in a range from 2 h to 8 h. Calcining is preferably performed in the oxidizing atmosphere, such as in the air atmosphere.

The hydrogenation catalyst is preferably prepared by using a method comprising the following steps:

(a) a solution comprising a rare earth metal element precursor is brought into contact with a carrier to obtain a second carrier, and at least some of solvent is removed from the second carrier to obtain a first intermediate carrier;
(b) optionally, the first intermediate carrier is brought into contact with a solution comprising an alkali metal element precursor and an alkaline earth metal element precursor to obtain a third carrier, and at least some of solvent is removed from the third carrier to obtain a second intermediate carrier;
(c) the first intermediate carrier or the second intermediate carrier is brought into contact with a solution comprising a platinum precursor, a group IVA element precursor, an optional group IVB metal element precursor, and an optional halogen group element precursor to obtain a fourth carrier, and at least some of solvent is removed from the fourth carrier to obtain a third intermediate carrier; and
(d) the third intermediate carrier is calcined.

The precursors described in step (a), step (b), and step (c) are not particularly limited by the present disclosure, and may each independently be a soluble compound of the above components, such as a soluble salt. A term "soluble" refers to being directly soluble in a solvent (such as water) or soluble in the solvent (such as water) in the presence of a cosolvent. Specifically, the platinum element precursor is preferably chloroplatinic acid; the group IVA element precursor may be a chloride and/or nitrate of the IVA element, preferably stannous chloride, tin chloride, or a combination thereof; the group IVB metal element precursor may be a chloride, nitrate or a combination thereof, preferably zirconium nitrate, zirconium oxynitrate or a combination thereof, and the rare earth metal element precursor may be a chloride of the rare earth metal, nitrate of the rare earth metal or a combination thereof. The alkali metal element precursor may be a chloride of alkali metal, nitrate of the alkali metal, or a combination thereof. The alkali metal element precursor may be a chloride of alkaline earth metal, nitrate of the alkaline earth metal, or a combination thereof. The halogen group element precursor is a halogen-containing compound, for example, it may be at least one selected from the group consisting of HCl, HBr, HI, and HF.

The concentration of the solution described in step (a), step (b), and step (c) is not particularly limited by the present disclosure, and can be determined based on a water absorption rate of the carrier and a target content of each component.

The solvents of the solutions described in step (a), step (b), and step (c) are each independently at least one selected from the group consisting of water, hydrochloric acid, and an organic solvent. The organic solvent is preferably alcohol, and preferred examples may include, but are not limited to one or more than two selected from the group consisting of ethanol, isopropanol, and butanol. Preferably, the solvents of the solutions described in step (a) and step (b) are water. In a preferred embodiment, the solvent of the solution in step (c) is ethanol. According to the preferred embodiment, beneficial for the uniform dispersion of catalyst components and the stability of catalyst activity may be achieved. In a more preferred embodiment, the solvent of the solution in step (c) is a mixed solution of hydrochloric acid and ethanol, wherein a volume ratio of the hydrochloric acid to the ethanol is preferably 1:(1-5). According to the more preferred embodiment, more beneficial for the uniform dispersion of catalyst components and the stability of catalyst activity may be achieved.

The hydrogenation catalyst is reduced before being used for a hydrogenation reaction. The reduction is performed in a hydrogen-containing atmosphere, preferably in a hydrogen atmosphere. The reduction temperature is preferably in a range from 400°C to 550°C. The duration of the reduction is preferably in a range from 1 h to 10 h. The reduction may be performed outside a hydrogenation reactor or in situ inside the hydrogenation reactor. Preferably, the hydrogenation catalyst is reduced in situ in the hydrogenation reactor.

When the hydrogenation reaction is performed using a traditional heterogeneous powder catalyst, the usual use amount of catalyst is in a range from 100wt% to 800wt% of the polymer due to the low catalytic activity of the catalyst. The catalyst used in the hydrogenation method according to the present disclosure has high reaction activity and can

significantly reduce the use amount of the hydrogenation catalyst. According to the hydrogenation method of the present disclosure, compared to 100 parts by weight of aromatic polymers, the use amount of the hydrogenation catalyst may be in a range from 1 part by weight to 20 parts by weight, preferably in a range from 2 parts by weight to 10 parts by weight, and more preferably in a range from 2.5 parts by weight to 5 parts by weight.

According to the method of the present disclosure, the aromatic polymer is brought into contact with the hydrogenation catalyst in the presence of at least one solvent. The solvent may be a solvent that can dissolve both the aromatic polymer and a hydrogenated aromatic polymer generated by the hydrogenation reaction. Specific examples of the solvent may include, but are not limited to at least one selected from the group consisting of cyclohexane, methylcyclohexane, n-hexane, cyclooctane, cyclohexane, acetone, n-butanone, decalin, and tetrahydrofuran.

When the hydrogenation reaction is performed using the traditional heterogeneous powder catalyst, the concentration of the polymer solution is limited due to the low catalytic activity of the catalyst. The excessively high concentration of the polymer solution leads to low hydrogenation efficiency, and usually the concentration of the polymer solution is less than 5wt%. The hydrogenation catalyst used in the present disclosure has high reaction activity and can react at high polymer concentration. According to the hydrogenation method of the present disclosure, the use amount of solvent enables the concentration of the obtained polymer to reach 20wt%, preferably it enables the concentration of the polymer be in a range from 5wt% to 15wt%.

According to the hydrogenation method of the present disclosure, the temperature of the hydrogenation reaction may be in a range from 50°C to 200°C, preferably in a range from 120°C to 180°C, and more preferably in a range from 120°C to 150°C.

According to the hydrogenation method of the present disclosure, a hydrogenation reagent may be a commonly used hydrogenation reagent. In a preferred embodiment, the hydrogenation reagent is hydrogen. When the hydrogen is used as the hydrogenation reagent, a pressure of the hydrogen may be in a range from 0.1 MPa to 10 MPa, preferably in a range from 0.5 MPa to 5 MPa, and the pressure is a gauge pressure.

According to the hydrogenation method of the present disclosure, the hydrogenation catalyst may be reused. Generally, after the hydrogenation reaction is completed, a hydrogenation reaction mixture may be subjected to solid-liquid separation to recover the hydrogenation catalyst. The recovered hydrogenation catalyst may be reused for the hydrogenation reaction, and washing and drying are preferably performed in sequence before the recovered hydrogenation catalyst is reused for the hydrogenation reaction.

According to the hydrogenation method of the present disclosure, an aromatic ring hydrogenation degree is high. According to the hydrogenation method of the present disclosure, the aromatic ring hydrogenation degree is may be 95 mole% or higher, preferably 97 mole% or higher, more preferably 98 mole% or higher, further preferably 99 mole% or higher, and more further preferably 100 mole%. According to the hydrogenation method of the present disclosure, when the aromatic polymer comprises a conjugated diene structural unit, a hydrogenation degree of the conjugated diene structural unit may be 97 mole% or higher, preferably 99 mole% or higher, and more preferably 100 mole%.

According to the hydrogenation method of the present disclosure, the aromatic polymer undergoes less degradation during the hydrogenation reaction process. According to the hydrogenation method of the present disclosure, a number average molecular weight of the aromatic polymer serving as a hydrogenation reaction raw material is defined as $M_n1$, a number average molecular weight of the hydrogenated aromatic polymer serving as a hydrogenation reaction product is defined as $M_n2$, $[(M_n1 - M_n2)/ M_n1] \times 100\%$ is defined as a degradation rate, and the degradation rate is not higher than 2.5%, preferably not higher than 1.5%, more preferably not higher than 1%, further preferably not higher than 0.5%, further preferably not higher than 0.3%, and particularly preferably not higher than 0.1%.

## 3. Hydrogenated block copolymer

The present disclosure provides a hydrogenated block copolymer, the block copolymer comprises a monovinyl aromatic hydrocarbon structural unit derived from monovinyl aromatic hydrocarbon and a conjugated diene structural unit derived from conjugated diene. The hydrogenated block copolymer is formed by hydrogenation of the block copolymer, and the hydrogenated block copolymer comprises a hydrogenated monovinyl aromatic hydrocarbon structural unit and a hydrogenated conjugated diene structural unit. In the hydrogenated block copolymer, a hydrogenation degree of an aromatic ring in the monovinyl aromatic hydrocarbon structural unit is 98 mole% or higher, preferably 99 mole% or higher, and more preferably 100 mole%, and a hydrogenation degree of an unsaturated double bond in the conjugated diene structural unit is 99 mole% or higher, preferably 99.5 mole% or higher, and more preferably 100 mole%.

According to the hydrogenated block copolymer of the present disclosure, the block copolymer comprises at least two homopolymerization segments of monovinyl aromatic hydrocarbon, at least one homopolymerization segment of conjugated diene, and at least two random copolymerization segments of the monovinyl aromatic hydrocarbon and the conjugated diene, two end-blocks of the block copolymer are each independently homopolymerization segment of the monovinyl aromatic hydrocarbon, blocks directly bonded to the end-blocks is inner-blocks, and the inner-blocks are each independently the random copolymerization segment of the monovinyl aromatic hydrocarbon and the conjugated

diene. When the block copolymer comprises the at least three random copolymerization segments of the monovinyl aromatic hydrocarbon and the conjugated diene and at least two homopolymerization segments of the conjugated diene, the homopolymerization segment of the conjugated diene is arranged at intervals with the random copolymerization segment of the monovinyl aromatic hydrocarbon and the conjugated diene, and two end-groups of the homopolymerization segment of the conjugated diene are each directly bonded to the random copolymerization segment of one monovinyl aromatic hydrocarbon and conjugated diene.

According to the hydrogenated block copolymer of the present disclosure, based on the total amount of the block copolymer, a content of the structural unit derived from the monovinyl aromatic hydrocarbon may be in a range from 40wt% to 95wt%, and a content of the structural units derived from the conjugated diene may be in a range from 5wt% to 60wt%, preferably not higher than 50wt%, for example, it may be in a range from 10wt% to 50wt%, more preferably 15wt% to 35%wt%, such as 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, 31wt%, 32wt%, 33wt%, 34wt% or 35wt%. Based on the total amount of the structural unit derived from the monovinyl aromatic hydrocarbon in the block copolymer, the content of the structural unit derived from the monovinyl aromatic hydrocarbon in the random copolymerization segment may be in a range from 15wt% to 20wt%, preferably in a range from 17wt% to 18.5wt%. In the block copolymer, based on the total amount of the conjugated diene structural unit, a content of a side group may be in a range from 40wt% to 60wt%.

In the preferred embodiment, the conjugated diene structural unit in the homopolymerization segment of the conjugated diene and the conjugated diene structural unit in the random copolymerization segment may be the same or different. Preferably, the homopolymerization segment of the conjugated diene comprises a homopolymerization segment of a first conjugated diene and at least one homopolymerization segment of a second conjugated diene, a structural unit in the homopolymerization segment of the first conjugated diene is derived from the first conjugated diene, a structural unit in the homopolymerization segment of the second conjugated diene is derived from the second conjugated diene, and the first conjugated diene is different from the second conjugated diene. More preferably, the homopolymerization segment of the first conjugated diene is directly bonded to one inner-block, the first conjugated diene is isoprene, and the second conjugated diene and the conjugated diene in the random copolymerization segment of the monovinyl aromatic hydrocarbon and the conjugated diene is butadiene. Based on the total amount of the hydrogenated block copolymer, a content of an isoprene structural unit derived from isoprene is preferably in a range from 0.5wt% to 10wt%, more preferably in a range from 1wt% to 5wt%, and further preferably in a range from 2wt% to 4wt%; and a content of a butadiene structural unit derived from butadiene is preferably in a range from 5wt% to 40wt%, more preferably in a range from 10wt% to 35wt%, and further preferably in a range from 15wt% to 30wt%.

According to the hydrogenated block copolymer of the present disclosure, a notched impact strength of the hydrogenated block copolymer is in a range from 20 kJ/$m^2$ to 30 kJ/$m^2$, preferably in a range from 21 kJ/$m^2$ to 25 kJ/$m^2$. An elongation at break of the hydrogenated block copolymer is in a range from 200% to 400%, preferably in a range from 250% to 380%, and more preferably in a range from 260% to 350%. A light transmittance of the hydrogenated block copolymer is in a range from 88% to 92%, preferably in a range from 90% to 92%. A haze of the hydrogenated block copolymer is in a range from 1 to 5, preferably in a range from 1 to 2. According to the block copolymer of the present disclosure, a vicat softening point of the hydrogenated block copolymer is in a range from 110°C to 150°C, preferably in a range from 115°C to 130°C.

In the present disclosure, the notched impact strength is a Charpy notched impact strength measured according to a method specified in ISO179-1-2000, and is obtained by testing through a Charpy tester, Ceast Resil Impactor6957, a spline size used is 80mm×10mm×4mm, and a size of a remaining width of a notch is 8±0.2 mm; the elongation at break is obtained using a material tensile testing machine INSTRON 5567 according to the method specified in ASTM D638-03, and a spline size used is 170mm×10mm×4mm; and the light transmittance and the haze are obtained by testing through an EEL57D haze meter according to a method specified in ASTM D1033-2007. In the present disclosure, the vicat softening point is obtained by testing through an Instron-HV6M type vicat softening point temperature tester, with a heating rate of 50°C/h and a load of 50N.

The present disclosure further provides a hydrogenated five-block copolymer, the hydrogenated five-block copolymer is formed by hydrogenation of the five-block copolymer, wherein the five-block copolymer is a five-block copolymer with a structure shown in formula II:

S51-(S52/B51)-B52-(S53/B53)-S54 (Formula II)

In formula II, an S51 block and an S54 block are end-blocks, and are each independently homopolymerization segment of monovinyl aromatic hydrocarbon; an S52/B51 block and an S53B53 block are inner-blocks, and are each independently random copolymerization segment of monovinyl aromatic hydrocarbon and conjugated diene; and a B52 block is a homopolymerization segment of the conjugated diene.

In the five-block copolymer shown in formula II, monovinyl aromatic hydrocarbon structural units in the S51 block, the S52/B51 block, the S53/B53 block, and an S54 block are respectively represented as an S51 monovinyl

aromatic hydrocarbon structural unit, an S52 monovinyl aromatic hydrocarbon structural unit, an S53 monovinyl aromatic hydrocarbon structural unit, and an S54 monovinyl aromatic hydrocarbon structural unit, which can be the same or different, and each can be one or more than two selected from the group consisting of styrene, 2-methylstyrene 4-methylstyrene and $\alpha$-methylstyrene. Preferably, the monovinyl aromatic hydrocarbon structural units in the S51 block, the S52/B51 block, the S53/B53 block, and the S54 block are the same, and are all styrene structural units derived from styrene. In formula II, when the monovinyl aromatic hydrocarbon structural units in the S51 block, the S52/B51 block, the S53/B53 block, and the S54 block are all styrene structural units derived from styrene, based on the total amount of the styrene structural units in the hydrogenated block copolymer, a content of a styrene non-block is preferably in a range from 15wt% to 20wt%, more preferably in a range from 17wt% to 18.5wt%.

In the five-block copolymer shown in formula II, the conjugated diene structural unit in the B52 block is derived from B52 conjugated diene, the conjugated diene structural unit in the S52/B51 block is derived from B51 conjugated diene, the conjugated diene structural unit in the S53/B53 block is derived from B53 conjugated diene, the B52 conjugated diene, the B51 conjugated diene, and the B53 conjugated diene may be the same or different, and each may be at least one selected from the group consisting of butadiene, isoprene, 1,3-pentadiene, 1,3-hexadiene, and 2,3-dimethylbutadiene. Preferably, the B52 conjugated diene is different from the B51 conjugated diene and the B53 conjugated diene, and the B51 conjugated diene is preferably the same as the B53 conjugated diene.

More preferably, the B52 conjugated diene is isoprene, and the B51 conjugated diene and the B53 conjugated diene are butadiene. Based on the total amount of the five-lock copolymer, a content of an isoprene structural unit derived from isoprene is preferably in a range from 0.5wt% to 10wt%, more preferably in a range from 1wt% to 5wt%, and further preferably in a range from 2wt% to 4wt%; and a content of a butadiene structural unit derived from butadiene is preferably in a range from 5wt% to 40wt%, more preferably in a range from 10wt% to 35wt%, and further preferably in a range from 15wt% to 30wt%. Based on the total amount of the isoprene structural unit derived from isoprene in the five-block copolymer, a content of an isoprene structural unit with a vinyl side group (namely, a content of the side group) is preferably in a range from 50wt% to 60wt%, and more preferably in a range from 50wt% to 57wt%. Based on the total amount of the structural unit derived from butadiene in the five-block copolymer, a content of a butadiene structural unit with vinyl side group (namely, the content of the side group) is preferably in a range from 40wt% to 60wt%, and more preferably in a range from 45wt% to 55wt%.

Based on the total amount of the five-block copolymer shown in formula II, a content of a monovinyl aromatic hydrocarbon structural unit derived from monovinyl aromatic hydrocarbon is preferably in a range from 40wt% to 95wt%, more preferably in a range from 50wt% to 90wt%, and further preferably in a range from 65wt% to 85wt%; and a content of a conjugated diene structural unit derived from conjugated diene is preferably in a range from 5wt% to 60wt%, more preferably in a range from 10wt% to 50wt%, and further preferably in a range from 15wt% to 35wt%. The monovinyl aromatic hydrocarbon structural unit includes the monovinyl aromatic hydrocarbon structural unit in the S51 block, the monovinyl aromatic hydrocarbon structural unit in the S54 block, the monovinyl aromatic hydrocarbon structural unit in the S52/B51 block, and the monovinyl aromatic hydrocarbon structural unit in the S53/B53 block; and the conjugated diene structural unit includes the conjugated diene structural unit in the S52/B51 block, the conjugated diene structural unit in the B52 block, and the conjugated diene structural unit in the S53/B53 block.

In the five-block copolymer shown in formula II, a number average molecular weight of the S51 block is preferably in a range from 5000 to 50000, a number average molecular weight of the S52/B51 block is preferably in a range from 20000 to 50000, a number average molecular weight of the S53/B53 block is preferably in a range from 20000 to 50000, and a number average molecular weight of the B52 block is preferably in a range from 2000 to 20000. In the aromatic polymer shown in formula II, a ratio of the number average molecular weight of the S51 block to the number average molecular weight of the S54 block is preferably 1:(2-10), more preferably 1:(2-6). In the five-block copolymer shown in formula II, a ratio of the number average molecular weight of the S52/B51 block to the number average molecular weight of the S53/B53 block is preferably 1:(0.9-1.25).

A number average molecular weight of the five-block copolymer shown in formula II is preferably in a range from 50000 to 220000, and more preferably in a range from 80000 to 200000. A molecular weight distribution index ($M_w/M_n$) of the five-block copolymer shown in formula II is preferably in a range from 1.05 to 1.2.

In the five-block copolymer according to the present disclosure, the hydrogenated five-block copolymer comprises a hydrogenated monovinyl aromatic hydrocarbon structural unit and a hydrogenated conjugated diene structural unit. In the hydrogenated block copolymer, a hydrogenation degree of an aromatic ring in the monovinyl aromatic hydrocarbon structural unit is 98 mole% or higher, preferably 99 mole% or higher, and more preferably 100 mole%, and a hydrogenation degree of an unsaturated double bond in the conjugated diene structural unit is 99 mole% or higher, preferably 99.5 mole% or higher, and more preferably 100 mole%.

According to the hydrogenated block copolymer of the present disclosure, a notched impact strength of the hydrogenated block copolymer is in a range from 20 kJ/$m^2$ to 30 kJ/$m^2$, preferably in a range from 21 kJ/$m^2$ to 25 kJ/$m^2$. An elongation at break of the hydrogenated block copolymer is in a range from 200% to 400%, preferably in a range from 250% to 380%, and more preferably in a range from 260% to 350%. A light transmittance of the hydrogenated

block copolymer is in a range from 88% to 92%, preferably in a range from 90% to 92%. A haze of the hydrogenated block copolymer is in a range from 1 to 5, preferably in a range from 1 to 2. According to the hydrogenated five-block copolymer of the present disclosure, a vicat softening point of the hydrogenated five-block copolymer is in a range from 110°C to 150°C, preferably in a range from 115°C to 130°C.

The present disclosure further provides a hydrogenated seven-block copolymer, wherein the seven-block copolymer is a seven-block copolymer with a structure shown in formula III:

S71-(S72/B71)-B72-(S73/B73)-B74-(S75/B75)-S76 (Formula III)

In formula III, an S71 block and an S76 block are end-blocks, and are each independently homopolymerization segment of monovinyl aromatic hydrocarbon; an S72/B71 block, an S73/B73 blocks and an S75/B75 block are each independently random copolymerization segment of monovinyl aromatic hydrocarbon and conjugated diene, wherein the S72/B71 block and the S72/B71 block are inner blocks, and the B72 block and the B74 block are each independently homopolymerization segment of the conjugated diene.

In the seven-block copolymer shown in formula III, monovinyl aromatic hydrocarbon structural units in the S71 block, the S72/B71 block, the S73/B73 block, the S75/B75 block and the S76 block are respectively represented as an S71 monovinyl aromatic hydrocarbon structural unit, an S72 monovinyl aromatic hydrocarbon structural unit, an S73 monovinyl aromatic hydrocarbon structural unit, and an S75 monovinyl aromatic hydrocarbon structural unit, which can be the same or different, and each can be one or more than two selected from the group consisting of styrene, 2-methylstyrene 4-methylstyrene and $\alpha$-methylstyrene. Preferably, the monovinyl aromatic hydrocarbon structural units in the S71 block, the S72/B71 block, the S73/B73 block, the S75/B75 block and the S76 block are the same, and are all styrene structural units derived from styrene. In the seven-block copolymer shown in formula III, when the monovinyl aromatic hydrocarbon structural units in the S71 block, the S72/B71 block, the S73/B73 block, the S75/B75 block and the S76 block are all styrene structural units derived from styrene, based on the total amount of the styrene structural units in the seven-block copolymer, a content of a styrene non-block is preferably in a range from 15wt% to 20wt%, more preferably in a range from 17wt% to 18.5wt%.

In the seven-block copolymer shown in formula III, the conjugated diene structural unit in the B72 block is derived from B72 conjugated diene, the conjugated diene structural unit in the S72/B71 block is derived from B71 conjugated diene, the conjugated diene structural unit in the S73/B73 block is derived from B73 conjugated diene, the conjugated diene structural unit in the B74 block is derived from B74 conjugated diene, the conjugated diene structural unit in the S75B75 block is derived from B75 conjugated diene, the B72 conjugated diene, the B71 conjugated diene, the B73 conjugated diene, the B74 conjugated diene and the B75 conjugated diene may be the same or different, and each may be at least one selected from the group consisting of butadiene, isoprene, 1,3-pentadiene, 1,3-hexadiene, and 2,3-dimethylbutadiene. Preferably, the B72 conjugated diene is different from the B71 conjugated diene, the B73 conjugated diene, the B74 conjugated diene, and the B75 conjugated diene. The B71 conjugated diene, the B73 conjugated diene, the B74 conjugated diene, and the B75 conjugated diene are preferably the same.

In the seven-block copolymer shown in formula III, more preferably, the B72 conjugated diene is isoprene, and the B71 conjugated diene, the B73 conjugated diene, the B74 conjugated diene and the B75 conjugated diene are butadiene. Based on the total amount of the seven-lock copolymer, a content of an isoprene structural unit derived from isoprene is preferably in a range from 0.5wt% to 10wt%, more preferably in a range from 1wt% to 5wt%, and further preferably in a range from 2wt% to 4wt%; and a content of a butadiene structural unit derived from butadiene is preferably in a range from 5wt% to 40wt%, more preferably in a range from 10wt% to 35wt%, and further preferably in a range from 15wt% to 30wt%. Further preferably, based on the total amount of the structural unit derived from isoprene in the seven-block copolymer shown in formula III, a content of an isoprene structural unit with vinyl side group is preferably in a range from 40wt% to 60wt%, and more preferably in a range from 45wt% to 55wt%; and based on the total amount of the structural unit derived from butadiene in the seven-block copolymer shown in formula III, a content of the butadiene structural unit with vinyl side group is preferably in a range from 40wt% to 60wt%, and more preferably in a range from 45wt% to 55wt%.

In the seven-lock copolymer shown in formula III, based on the total amount of the seven-block copolymer, a content of a monovinyl aromatic hydrocarbon structural unit derived from monovinyl aromatic hydrocarbon is preferably in a range from 40wt% to 95wt%, more preferably in a range from 50wt% to 90wt%, and further preferably in a range from 65wt% to 85wt%; and a content of a conjugated diene structural unit derived from conjugated diene is preferably in a range from 5wt% to 60wt%, more preferably in a range from 10wt% to 50wt%, and further preferably in a range from 15wt% to 35wt%. The monovinyl aromatic hydrocarbon structural unit includes the monovinyl aromatic hydrocarbon structural unit in the S71 block, the monovinyl aromatic hydrocarbon structural unit in the S76 block, the monovinyl aromatic hydrocarbon structural unit in the S72/B71 block, the monovinyl aromatic hydrocarbon structural unit in the S73B73 block and the monovinyl aromatic hydrocarbon structural unit in the S75B75 block; and the conjugated diene structural unit includes the conjugated diene structural unit in the S72/B71 block, the conjugated diene structural unit in

the B72 block, the conjugated diene structural unit in the S73/B73 block, the conjugated diene structural unit in the B74 block and the conjugated diene structural unit in the S75B75 block.

In the seven-block copolymer shown in formula III, a number average molecular weight of the S71 block is preferably in a range from 5000 to 50000, a number average molecular weight of the S72/B71 block is preferably in a range from 20000 to 50000, a number average molecular weight of the B72 block is preferably in a range from 2000 to 20000, a number average molecular weight of the S73/B73 block is preferably in a range from 5000 to 50000, a number average molecular weight of the B74 block is preferably in a range from 2000 to 20000, a number average molecular weight of the S75/B75 block is preferably in a range from 5000 to 50000, and a number average molecular weight of the B76 block is preferably in a range from 10000 to 50000. In the seven-block copolymer shown in formula III, a ratio of the number average molecular weight of the S71 block to the number average molecular weight of the S76 block is preferably 1:(1.5-5), more preferably 1:(1.6-3). In the seven-block copolymer shown in formula III, a ratio of the number average molecular weight of the S72B71 block, the number average molecular weight of the S73B73 block, and the number average molecular weight of the S75/B75 block is preferably 1:(1-1.2):(1-1.25). In the seven-block copolymer shown in formula III, a ratio of the number average molecular weight of the S72 block to the number average molecular weight of the S74 block is preferably 1:(0.9-1.2).

In the seven-block copolymer shown in formula III, a number average molecular weight of the seven-block copolymer is preferably in a range from 50000 to 200000, and more preferably in a range from 120000 to 190000. A molecular weight distribution index ($M_w/M_n$) of the seven-block copolymer is preferably in a range from 1.05 to 1.2.

In the hydrogenated seven-block copolymer according to the present disclosure, the hydrogenated seven-block copolymer comprises a hydrogenated monovinyl aromatic hydrocarbon structural unit and a hydrogenated conjugated diene structural unit. In the hydrogenated seven-block copolymer, a hydrogenation degree of an aromatic ring in the monovinyl aromatic hydrocarbon structural unit is 98 mole% or higher, preferably 99 mole% or higher, and more preferably 99.5 mole%, and a hydrogenation degree of an unsaturated double bond in the conjugated diene structural unit is 99 mole% or higher, preferably 99.5 mole% or higher, and more preferably 100 mole%.

According to the hydrogenated seven-block copolymer of the present disclosure, a notched impact strength of the hydrogenated block copolymer is in a range from 20 $kJ/m^2$ to 30 $kJ/m^2$, preferably in a range from 21 $kJ/m^2$ to 25 $kJ/m^2$. An elongation at break of the hydrogenated seven-block copolymer is in a range from 200% to 400%, preferably in a range from 250% to 350%, and more preferably in a range from 260% to 320%. A light transmittance of the hydrogenated seven-block copolymer is in a range from 88% to 92%, preferably in a range from 90% to 92%. A haze of the hydrogenated seven-block copolymer is in a range from 1 to 5, preferably in a range from 1 to 2. According to the hydrogenated seven-block copolymer of the present disclosure, a vicat softening point of the hydrogenated seven-block copolymer is in a range from 110°C to 150°C, preferably in a range from 120°C to 140°C.

According to the hydrogenation method of the present disclosure, the hydrogenated block copolymer, the hydrogenated five-block copolymer, and the hydrogenated seven-block copolymer can be obtained by hydrogenation of the corresponding block copolymers.

The hydrogenated block copolymer, the hydrogenated five-block copolymer, and the hydrogenated seven-block copolymer according to the present disclosure are suitable for preparing a packaging material or an optoelectronic product.

The present disclosure is illustrated below with reference to Examples, but the scope of the present disclosure is not limited therefore.

In the following Examples and comparative examples, performance parameters involved are tested using the following methods:

(1) Hydrogenation degree and microstructure of polymers

It is determined by using a nuclear magnetic resonance hydrogen spectroscopy ($^1$H-NMR), $^1$H-NMR testing is conducted on an AVANCEDRX400MHz nuclear magnetic resonance instrument produced by BRUKER. A solvent used is deuterated chloroform, and a sample is prepared into a solution with a concentration of ranging from 1wt% to 2wt% at a room temperature, tetramethylsilane is used as an internal standard, wherein operating frequency of the nuclear magnetic resonance instrument is 400.13 MHz, a spectral width is 8012.82 Hz, a data point is 32K, a pulse angle is 30°, a pulse width is 6 $\mu$s, a pulse delay is 5 seconds, and the sampling frequency is 64 times.

(2) Molecular weight and molecular weight distribution index ($M_w/M_n$)

It is measured by using an alliance-2690 gel permeation chromatograph of Waters Company in the United States, a chromatographic column is a Mixed-C type of the PL company, a filler is 5 $\mu$m, a solvent is chromatography pure tetrahydrofuran (THF), narrow-distribution polystyrene is used as a standard sample, a polymer sample is prepared into a solution with a mass concentration of 1 mg/mL, the injection amount is 100.00 $\mu$L, a flow rate is 1 mL/min, and a testing temperature is 40.0°C.

(3) Light transmittance and haze

It is measured by using an EEL57D haze meter for measurement according to a method specified in ASTM

D1033-2007.

(4) Charpy notched impact strength

It is measured by using a Charpy tester, Ceast Resist Impactor6957 according to a method specified in ISO179-1-2000, the spline size used is 80mm×10mm×4mm, and a size of a remaining width of a notch is 8±0.2mm.

(5) Tensile elongation at break

It is measured by using a material tensile testing machine INSTRON 5567 according to a method specified in ASTM D638-03, and a spline size used is 170mm×10mm×4mm.

(6) Vicat softening point

It is measured by using an Instron-HV6M type vicat softening point temperature tester, with a heating rate of 50°C/h and a load of 50N.

(7) Composition of hydrogenation catalyst

The composition of the hydrogenation catalyst is determined by using a Japanese Science ZSX PrimusIV type X-ray fluorescence spectrometer.

(8) Specific surface area and average pore size of hydrogenation catalyst

The specific surface area and average pore size of the hydrogenation catalyst is measured by using an $N_2$ adsorption method on an ASAP 2020 type physical adsorption instrument purchased from Micromeritics Instruments.

In the following preparation examples, unless otherwise specified, the use amount of each precursor involved and the concentration of each precursor solution are determined according to the weight of the hydrogenation catalyst and the content of each element in the hydrogenation catalyst. In the following preparation, unless otherwise specified, the weight of the prepared hydrogenation catalyst is 10 g. In the following preparation examples, unless otherwise specified, a γ-alumina carrier used has a specific surface area of 350 $m^2$/g, and an average pore size of 20 nm.

The preparation examples 1-7 are used to prepare the hydrogenation catalyst.

Preparation example 1

The present preparation example is used to prepare a hydrogenation catalyst with the composition shown in Table 1.

(1) a γ-alumina carrier was impregnated with equivalent volume by using a cerium nitrate solution, the impregnated carrier was dried in an air atmosphere at 120°C for 8 hours to obtain an alumina carrier comprising a cerium element;

(2) the alumina carrier comprising the cerium element obtained in step (1) was impregnated with equivalent volume by using a solution comprising potassium nitrate and magnesium nitrate, the impregnated carrier was dried in the air atmosphere at 120°C for 8 hours to obtain a catalyst intermediate supported with the cerium element, a potassium element, and a magnesium element; and

(3) the catalyst intermediate obtained in step (2) was impregnated with equivalent volume by using a hydrochloric-acid ethanol solution (with a volume ratio of hydrochloric acid to anhydrous ethanol be 1:2) comprising chloroplatinic acid, tin chloride, and zirconium chloride, the platinum element, the tin element, the zirconium element were supported on the carrier, and the impregnated carrier was dried in the air atmosphere at 120°C for 8 hours, and then calcined in an air atmosphere at 600°C for 6 hours to obtain the hydrogenation catalyst. The hydrogenation catalyst has a specific surface area of 300 $m^2$/g, and an average pore size of 17.6 nm.

Preparation example 2

The present preparation example is used to prepare a hydrogenation catalyst with the composition shown in Table 1.

The hydrogenation catalyst was prepared using the same method as preparation example 1, except that the use amount of precursor was changed to obtain hydrogenation catalysts with different compositions. The hydrogenation catalyst has a specific surface area of 295$m^2$/g, and an average pore size of 18.2 nm.

Preparation example 3

The present preparation example is used to prepare a hydrogenation catalyst with the composition shown in Table 1.

The hydrogenation catalyst was prepared using the same method as preparation example 1, except that the use amount of precursor was changed to obtain hydrogenation catalysts with different compositions. The hydrogenation catalyst has a specific surface area of 290 $m^2$/g, and an average pore size of 18.5 nm.

Preparation example 4

The present preparation example is used to prepare a hydrogenation catalyst with the composition shown in Table 1.

The hydrogenation catalyst was prepared using the same method as in preparation example 1, except that step (2) was not performed, the alumina carrier comprising the cerium element prepared in step (1) was directly used in step (3), and was impregnated with equivalent volume through the hydrochloric-acid ethanol solution comprising chloroplatinic acid, tin chloride, and zirconium chloride, and the use amount of precursor was adjusted to obtain the hydrogenation catalyst. The hydrogenation catalyst has a specific surface area of 280 $m^2/g$, and an average pore size of 18.7 nm.

Preparation example 5

The present preparation example is used to prepare a hydrogenation catalyst with the composition shown in Table 1.

The hydrogenation catalyst was prepared using the same method as preparation example 1, except that the use amount of precursor was changed to obtain hydrogenation catalysts with different compositions. The hydrogenation catalyst has a specific surface area of 280 $m^2/g$, and an average pore size of 18.9 nm.

Preparation comparative example 1 (not present disclosure)

The $\gamma$-alumina carrier used in step (1) of preparative example 1 was impregnated with equivalent volume through a nickel nitrate solution under the same condition as in step (3) of preparation example 1, and the impregnated carrier was dried in an air atmosphere at 120°C for 8 hours to obtain a catalyst supported with a nickel element. Based on the total amount of the catalyst, by element, a content of nickel in the catalyst is 10wt%.

Preparation comparative example 2 (not present disclosure)

The present preparation comparative example is used to prepare a catalyst with the composition shown in Table 1.

The hydrogenation catalyst was prepared using the same method as preparation example 1, except that the use amount of precursor was changed to obtain hydrogenation catalysts with different compositions. The hydrogenation catalyst has a specific surface area of 230 $m^2/g$, and an average pore size of 18.2 nm.

Preparation comparative example 3 (not present disclosure)

The present preparation comparative example is used to prepare a catalyst with the composition shown in Table 1.

The hydrogenation catalyst was prepared by using the same method as in preparation example 1, except that an impregnation solution used in step (3) did not comprise tin chloride. The obtained hydrogenation catalyst has a specific surface area of 230 $m^2/g$ and an average pore size of 18.3 nm.

Preparation example 6

The present preparation example is used to prepare a catalyst with the composition shown in Table 1.

The hydrogenation catalyst was prepared by using the same method as in preparation example 1, except that an impregnation solution used in step (3) did not comprise HCl, and HCl was replaced with equivalent volume of anhydrous ethanol. The obtained hydrogenation catalyst has a specific surface area of 280 $m^2/g$ and an average pore size of 18.2 nm.

Preparation example 7

The present preparation example is used to prepare a catalyst with the composition shown in Table 1.

The hydrogenation catalyst was prepared by using the same method as in preparation example 1, except that an impregnation solution used in step (3) did not comprise zirconium chloride. The obtained hydrogenation catalyst has a specific surface area of 280 $m^2/g$ and an average pore size of 18.3 nm.

Table 1

| Serial number | Element content/weight% | | | | | | |
|---|---|---|---|---|---|---|---|
| | Pt | Sn | Zr | Ce | K | Mg | Cl |
| Preparation example 1 | 0.5 | 1.5 | 1 | 1 | 1 | 1 | 0.4 |
| Preparation example 2 | 0.4 | 0.8 | 0.5 | 0.5 | 1.5 | 1.5 | 0.4 |
| Preparation example 3 | 0.3 | 1.2 | 1 | 1 | 1 | 1 | 0.3 |
| Preparation example 4 | 0.5 | 1.5 | 1 | 1 | 0 | 0 | 0.4 |
| Preparation example 5 | 0.7 | 0.7 | 1 | 1 | 1 | 1 | 0.3 |
| Preparation comparative example 2 | 0.5 | 3.5 | 1 | 1 | 1 | 1 | 0.4 |
| Preparation comparative example 3 | 0.5 | 0 | 1 | 1 | 1 | 1 | 0.4 |
| Preparation example 6 | 0.5 | 1.5 | 1 | 1 | 1 | 1 | 0 |
| Preparation example 7 | 0.5 | 1.5 | 0 | 1 | 1 | 1 | 0.4 |
| Note: Based on the total amount of the hydrogenation catalyst, by element. | | | | | | | |

Examples 1-19 are used to illustrate the present disclosure.

Example 1

(1) Preparation of block copolymer

(1-1) 800 g of cyclohexane, 60 mg of tetrahydrofuryl ethyl ether (ETE), and 38 g of styrene were added in a 2 L of stainless steel stirring kettle, a temperature was raised to 50°C, 1.6 mmol of n-butyl lithium initiator was added, polymerization was performed at 50°C for 30 minutes to obtain a styrene homopolymer, and a conversion rate of styrene is above 99%;

(1-2) the temperature of the stirring kettle was kept at 50°C, 30 g of butadiene and 22 g of styrene were added to the stirring kettle, and reacted for 40 minutes to achieve random copolymerization of butadiene and styrene, a conversion rate of butadiene is more than 99%, and a conversion rate of styrene is more than 99%;

(1-3) the temperature of the stirring kettle was kept at 50°C, 6 g of isoprene was added to the stirring kettle, and reacted for 40 minutes, and a conversion rate of isoprene is more than 99%;

(1-4) the temperature of the stirring kettle was kept at 50°C, 30 g of butadiene and 22 g of styrene were added to the stirring kettle, and reacted for 30 minutes to achieve random copolymerization of butadiene and styrene, a conversion rate of butadiene is more than 99%, and a conversion rate of styrene is more than 99%;

(1-5) the temperature of the stirring kettle was kept at 50°C, 92 g of styrene was added to the stirring kettle, and continued to react for 30 minutes, and a conversion rate of styrene is more than 99%; and

(1-6) 0.25 g of isopropanol was added to the stirring kettle, and the reaction was terminated at 50°C to obtain a block copolymer; an anti-aging agent 1076 was added to the obtained glue solution, the addition amount of the anti-aging agent 1076 was 1wt% of the total weight of monomers added in each reaction step; after mixing for 10 minutes, a glue solution comprising the block copolymer was obtained, and the concentration of the block copolymer in the glue solution was adjusted to 10wt%, wherein structural parameters of the block copolymer is shown in Table 2, a structure of the block copolymer is S51-S52/B51-B52-S53/B53-S54, wherein S51, S52, S53 and S54 are both structural units derived from styrene, B51 and B53 are structural units derived from butadiene, and B52 is a structural unit derived from isoprene.

(2) Preparation of hydrogenated block copolymer

The hydrogenation catalyst prepared in preparation example 1 was reduced to obtain a reduced catalyst, and the reduced catalyst was used for a hydrogenation reaction, wherein the reduction was performed in a hydrogen atmosphere at a temperature of 450°C and a duration of 2 hours.

In a 0.5 L of high-pressure reaction kettle with stirring, 200 g of glue solution comprising the block copolymer prepared in step (1) and 1 g of reduced hydrogenation catalyst were added for a hydrogenation reaction, a reaction temperature was 150°C, a hydrogen pressure was 3 MPa, a reaction time was 1 hour, and a stirring speed was 800 rpm.

After the hydrogenation reaction was completed, products of the hydrogenation reaction were subjected to centrifugal separation to obtain a reaction mixture comprising the hydrogenated block copolymer, the reaction mixture was filtered to separate the hydrogenation catalyst, and the separated hydrogenation catalyst was washed with n-hexane and vacuum dried before being recycled for the hydrogenation reaction, through measuring, after the hydrogenation catalyst is recycled for 5 times, its hydrogenation activity decay rate is within 2% (based on the hydrogenation activity at the first use). A liquid phase obtained by filtering was collected, and a solvent was removed to obtain a hydrogenated block copolymer according to the present disclosure. The structure and performance parameters of the hydrogenated block copolymer are listed in Table 3.

Example 2

(1) Preparation of block copolymer

(1-1) 800 g of cyclohexane, 60 mg of ETE, and 19g of styrene were added in a 2 liters of stainless steel stirring kettle, a temperature was raised to 50°C, 2.4mmol of n-butyl lithium initiator was added, polymerization was performed at 50°C for 30 minutes to obtain a styrene homopolymer, and a conversion rate of styrene is more than 99%;

(1-2) the temperature of the stirring kettle was kept at 50°C, 30 g of butadiene and 22 g of styrene were added to the stirring kettle, and reacted for 40 minutes to achieve random copolymerization of butadiene and styrene, a conversion rate of butadiene is above 99%, and a conversion rate of styrene is more than 99%;

(1-3) the temperature of the stirring kettle was kept at 50°C, 6 g of isoprene was added to the stirring kettle, and reacted for 40 minutes, and a conversion rate of isoprene is more than 99%;

(1-4) the temperature of the stirring kettle was kept at 50°C, 30 g of butadiene and 22 g of styrene were added to the stirring kettle, and reacted for 30 minutes to achieve random copolymerization of butadiene and styrene, a conversion rate of butadiene is more than 99%, and a conversion rate of styrene is more than 99%;

(1-5) the temperature of the stirring kettle was kept at 50°C, 111g of styrene was added to the stirring kettle, and continued to react for 30 minutes, and a conversion rate of styrene is more than 99%; and

(1-6) 0.25 g of isopropanol was added to the stirring kettle, and the reaction was terminated at 50°C to obtain a block copolymer; an anti-aging agent 1076 was added to the obtained glue solution, the addition amount of the anti-aging agent 1076 was 1wt% of the total weight of monomers added in each reaction step; after mixing for 10 minutes, a glue solution comprising the block copolymer was obtained, and the concentration of the block copolymer in the glue solution was adjusted to 10wt%, wherein structural parameters of the block copolymer is shown in Table 2, a structure of the block copolymer is S51-S52/B51-B52-S53/B53-S54, wherein S51, S52, S53 and S54 are both structural units derived from styrene, B51 and B53 are structural units derived from butadiene, and B52 is a structural unit derived from isoprene.

(2) Preparation of hydrogenated block copolymer

The hydrogenated block copolymer was prepared using the same method as Example 1, except that the structure and performance parameters of the hydrogenated block copolymer prepared by using the glue solution comprising the block copolymer prepared in step (1) of Example 2 are listed in Table 3.

Example 3

(1) Preparation of block copolymer

(1-1) 800 g of cyclohexane, 50mg of ETE, and 38g of styrene were added in a 2 liters of stainless steel stirring kettle, a temperature was raised to 50°C, 2.4mmol of n-butyl lithium initiator was added, polymerization was

performed at 50°C for 30 minutes to obtain a styrene homopolymer, and a conversion rate of styrene is more than 99%;
(1-2) the temperature of the stirring kettle was kept at 50°C, 30 g of butadiene and 22 g of styrene were added to the stirring kettle, and reacted for 40 minutes to achieve random copolymerization of butadiene and styrene, a conversion rate of butadiene is more than 99%, and a conversion rate of styrene is more than 99%;
(1-3) the temperature of the stirring kettle was kept at 50°C, 6 g of isoprene was added to the stirring kettle, and reacted for 40 minutes, and a conversion rate of isoprene is more than 99%;
(1-4) the temperature of the stirring kettle was kept at 50°C, 30 g of butadiene and 22 g of styrene were added to the stirring kettle, and reacted for 30 minutes to achieve random copolymerization of butadiene and styrene, a conversion rate of butadiene is more than 99%, and a conversion rate of styrene is more than 99%;
(1-5) the temperature of the stirring kettle was kept at 50°C, 111g of styrene was added to the stirring kettle, and continued to react for 30 minutes, and a conversion rate of styrene is more than 99%; and
(1-6) 0.25 g of isopropanol was added to the stirring kettle, and the reaction was terminated at 50°C to obtain a block copolymer; an anti-aging agent 1076 was added to the obtained glue solution, the addition amount of the anti-aging agent 1076 was 1wt% of the total weight of monomers added in each reaction step; after mixing for 10 minutes, a glue solution comprising the block copolymer was obtained, and the concentration of the block copolymer in the glue solution was adjusted to 10wt%, wherein structural parameters of the block copolymer is shown in Table 2, a structure of the block copolymer is S51-S52/B51-B52-S53/B53-S54, wherein S51, S52, S53 and S54 are both structural units derived from styrene, B51 and B53 are structural units derived from butadiene, and B52 is a structural unit derived from isoprene.

(2) Preparation of hydrogenated block copolymer

The hydrogenated block copolymer was prepared using the same method as Example 1, except that the structure and performance parameters of the hydrogenated block copolymer prepared by using the glue solution comprising the block copolymer prepared in step (1) of Example 3 are listed in Table 3.

Example 4

(1) Preparation of block copolymer

The block copolymer was prepared using the same method as Example 1, except that the styrene in step (1-1), step (1-2), and step (1-4) was respectively replaced with equal weight of 2-vinyl toluene (2-EMB), and the styrene in step (1-5) was replaced with equal weight of $\alpha$-methylstyrene (AMS). Structural parameters of the block copolymer prepared are shown in Table 2, the structure of the block copolymer is S51-S52/B51-B52-S53/B53-S54, wherein S51, S52, and S53 are all structural units derived from 2-vinyl toluene, S54 is the structural unit derived from $\alpha$-methylstyrene, B51 and B53 are both structural units derived from butadiene, and B52 is the structural unit derived from isoprene.

(2) Preparation of hydrogenated block copolymer

The hydrogenated block copolymer was prepared using the same method as Example 1, except that the structure and performance parameters of the hydrogenated block copolymer prepared by using the glue solution comprising the block copolymer prepared in step (1) of Example 4 are listed in Table 3.

Example 5

(1) Preparation of block copolymer

The block copolymer was prepared using the same method as Example 1, except that the butadiene in step (1-2) and step (1-4) were respectively replaced with equal weight of isoprene. Structural parameters of the block copolymer prepared are shown in Table 2, the structure of the block copolymer is S51-S52/B51-B52-S53/B53-S54, wherein S51, S52, S53 and S54 are all structural units derived from styrene, and B51, B53 and B52 are all structural units derived from isoprene.

(2) Preparation of hydrogenated block copolymer

The hydrogenated block copolymer was prepared using the same method as Example 1, except that the structure and performance parameters of the hydrogenated block copolymer prepared by using the glue solution comprising the block copolymer prepared in step (1) of Example 5 are listed in Table 3.

Comparative Example 1 (not present disclosure)

The block copolymer was prepared by using the same method as Example 1, and the block copolymer was subjected to a hydrogenation reaction to prepare a hydrogenated block copolymer, except that in step (2), the hydrogenation catalyst was replaced by equal weight of catalyst supported with a nickel element prepared in preparation comparative example 1. The reduction condition of the hydrogenation catalyst supported with the nickel element was as follows: under a hydrogen atmosphere, a catalyst precursor comprising nickel was reduced at 500°C for 6 hours to obtain the reduced hydrogenation catalyst, and structure and performance parameters of the hydrogenated block copolymer prepared are listed in Table 3.

Comparative Example 2 (not present disclosure)

The block copolymer was prepared using the same method as Example 1, and the block copolymer was subjected to a hydrogenation reaction to prepare a hydrogenated block copolymer, except that in step (2), the hydrogenation catalyst was replaced by equal weight of hydrogenation catalyst prepared in preparation comparative example 2, and structure and performance parameters of the hydrogenated block copolymer prepared are listed in Table 3.

Comparative Example 3 (not present disclosure)

The block copolymer was prepared using the same method as Example 1, and the block copolymer was subjected to a hydrogenation reaction to prepare a hydrogenated block copolymer, except that in step (2), the hydrogenation catalyst was replaced by equal weight of hydrogenation catalyst prepared in preparation comparative example 3, and structure and performance parameters of the hydrogenated block copolymer prepared are listed in Table 3.

Example 6

The block copolymer was prepared using the same method as Example 1, and the block copolymer was subjected to a hydrogenation reaction to prepare a hydrogenated block copolymer, except that in step (2), the hydrogenation catalyst was replaced by equal weight of hydrogenation catalyst prepared in preparation example 6, and structure and performance parameters of the hydrogenated block copolymer prepared are listed in Table 3.

Example 7

The block copolymer was prepared using the same method as Example 1, and the block copolymer was subjected to a hydrogenation reaction to prepare a hydrogenated block copolymer, except that in step (2), the hydrogenation catalyst was replaced by equal weight of hydrogenation catalyst prepared in preparation example 7, and structure and performance parameters of the hydrogenated block copolymer prepared are listed in Table 3.

Example 8

(1) Preparation of block copolymer

(1-1) 800 g of cyclohexane, 100 mg of tetrahydrofuran (THF), and 38 g of styrene were added in a 2 liters of stainless steel stirring kettle, a temperature was raised to 50°C, 2.4 mmol of n-butyl lithium initiator was added, polymerization was performed at 50°C for 30 minutes to obtain a styrene homopolymer, and a conversion rate of styrene is more than 99%;
(1-2) the temperature of the stirring kettle was kept at 50°C, 30 g of butadiene was added to the stirring kettle, and reacted for 40 minutes, and a conversion rate of butadiene is more than 99%;
(1-3) the temperature of the stirring kettle was kept at 50°C, 22 g of styrene was added to the stirring kettle, and reacted for 40 minutes, and a conversion rate of styrene is more than 99%; and
(1-4) the temperature of the stirring kettle was kept at 50°C, 30 g of butadiene was added to the stirring kettle, and reacted for 30 minutes, and a conversion rate of butadiene is more than 99%;
(1-5) the temperature of the stirring kettle was kept at 50°C, 92 g of styrene was added to the stirring kettle, and continued to react for 30 minutes, and a conversion rate of styrene is more than 99%; and

(1-6) 0.25 g of isopropanol was added to the stirring kettle, and the reaction was terminated at 50°C to obtain a block copolymer; an anti-aging agent 1076 was added to the obtained glue solution, the addition amount of the anti-aging agent 1076 was 1wt% of the total weight of monomers added in each reaction step; and after mixing for 10 minutes, a glue solution comprising the block copolymer was obtained, and the concentration of the block copolymer in the glue solution was adjusted to 10wt%, wherein structural parameters of the block copolymer is shown in Table 2.

(2) Preparation of hydrogenated block copolymer

The hydrogenated block copolymer was prepared using the same method as Example 1, except that the structure and performance parameters of the hydrogenated block copolymer prepared by using the glue solution comprising the block copolymer prepared in step (1) of Example 8 are listed in Table 3.

Example 9

(1) Preparation of block copolymer

(1-1) 800 g of cyclohexane, 100 mg of tetrahydrofuran (THF), and 38 g of styrene were added in a 2 liters of stainless steel stirring kettle, a temperature was raised to 50°C, 2.4 mmol of n-butyl lithium initiator was added, polymerization was performed at 50°C for 30 minutes to obtain a styrene homopolymer, and a conversion rate of styrene is more than 99%;
(1-2) the temperature of the stirring kettle was kept at 50°C, 30 g of butadiene was added to the stirring kettle, and reacted for 40 minutes, and a conversion rate of butadiene is more than 99%;
(1-3) the temperature of the stirring kettle was kept at 50°C, 30 g of butadiene and 22 g of styrene were added to the stirring kettle, and reacted for 40 minutes to achieve random copolymerization of butadiene and styrene, a conversion rate of butadiene is more than 99%, and a conversion rate of styrene is more than 99%;
(1-4) the temperature of the stirring kettle was kept at 50°C, 92 g of styrene was added to the stirring kettle, and continued to react for 30 minutes, and a conversion rate of styrene is more than 99%; and
(1-5) finally, 0.25 g of isopropanol was added to the stirring kettle, and the reaction was terminated at 50°C to obtain a block copolymer; an anti-aging agent 1076 was added to the obtained glue solution, the addition amount of the anti-aging agent 1076 was 1wt% of the total weight of monomers added in each reaction step; and after mixing for 10 minutes, a glue solution comprising the block copolymer was obtained, and the concentration of the block copolymer in the glue solution was adjusted to 10wt%, wherein structural parameters of the block copolymer is shown in Table 2.

(2) Preparation of hydrogenated block copolymer

The hydrogenated block copolymer was prepared using the same method as Example 1, except that the structure and performance parameters of the hydrogenated block copolymer prepared by using the glue solution comprising the block copolymer prepared in step (1) of Example 9 are listed in Table 3.

Example 10

(1) Preparation of block copolymer

(1-1) 800 g of cyclohexane, 60 mg of tetrahydrofuryl ethyl ether (ETE), and 30 g of isoprene were added in a 2 L of stainless steel stirring kettle, a temperature was raised to 50°C, 1.6 mmol of n-butyl lithium initiator was added, polymerization was performed at 50°C for 30 minutes to obtain an isoprene homopolymer, and a conversion rate of isoprene is more than 99%;
(1-2) the temperature of the stirring kettle was kept at 50°C, 30 g of butadiene and 22 g of styrene were added to the stirring kettle, and reacted for 40 minutes to achieve random copolymerization of butadiene and styrene, a conversion rate of butadiene is more than 99%, and a conversion rate of styrene is more than 99%;
(1-3) the temperature of the stirring kettle was kept at 50°C, 6 g of isoprene was added to the stirring kettle, and reacted for 40 minutes, and a conversion rate of isoprene is more than 99%;

(1-4) the temperature of the stirring kettle was kept at 50°C, 30 g of butadiene and 22 g of styrene were added to the stirring kettle, and reacted for 30 minutes to achieve random copolymerization of butadiene and styrene, a conversion rate of butadiene is more than 99%, and a conversion rate of styrene is more than 99%;
(1-5) the temperature of the stirring kettle was kept at 50°C, 92 g of styrene was added to the stirring kettle, and continued to react for 30 minutes, and a conversion rate of styrene is more than 99%; and
(1-6) finally, 0.25 g of isopropanol was added to the stirring kettle, and the reaction was terminated at 50°C to obtain a block copolymer; an anti-aging agent 1076 was added to the obtained glue solution, the addition amount of the anti-aging agent 1076 was 1wt% of the total weight of monomers added in each reaction step; and after mixing for 10 minutes, a glue solution comprising the block copolymer was obtained, and the concentration of the block copolymer in the glue solution was adjusted to 10wt%, wherein structural parameters of the block copolymer is shown in Table 2.

(2) Preparation of hydrogenated block copolymer

The hydrogenated block copolymer was prepared using the same method as Example 1, except that the structure and performance parameters of the hydrogenated block copolymer prepared by using the glue solution comprising the block copolymer prepared in step (1) of Example 10 are listed in Table 3.

Example 11

(1) Preparation of block copolymer

(1-1) 800 g of cyclohexane, 60 mg of ethyl tetrahydrofurfuryl ether (ETE), and 38 g of styrene were added in a 2 L of stainless steel stirring kettle, a temperature was raised to 50°C, 1.6 mmol of n-butyl lithium initiator was added, polymerization was performed at 50°C for 30 minutes to obtain a styrene homopolymer, and a conversion rate of styrene is more than 99%;
(1-2) the temperature of the stirring kettle was kept at 50°C, 30 g of butadiene and 22 g of styrene were added to the stirring kettle, and reacted for 40 minutes to achieve random copolymerization of butadiene and styrene, a conversion rate of butadiene is more than 99%, and a conversion rate of styrene is more than 99%;
(1-3) the temperature of the stirring kettle was kept at 50°C, 20 g of styrene was added to the stirring kettle, and reacted for 40 minutes, and a conversion rate of styrene is more than 99%; and
(1-4) the temperature of the stirring kettle was kept at 50°C, 30 g of butadiene and 22 g of styrene were added to the stirring kettle, and reacted for 30 minutes to achieve random copolymerization of butadiene and styrene, a conversion rate of butadiene is more than 99%, and a conversion rate of styrene is more than 99%;
(1-5) the temperature of the stirring kettle was kept at 50°C, 92 g of styrene was added to the stirring kettle, and continued to react for 30 minutes, and a conversion rate of styrene is more than 99%; and
(1-6) 0.25 g of isopropanol was added to the stirring kettle, and the reaction was terminated at 50°C to obtain a block copolymer; an anti-aging agent 1076 was added to the obtained glue solution, the addition amount of the anti-aging agent 1076 was 1wt% of the total weight of monomers added in each reaction step; and after mixing for 10 minutes, a glue solution comprising the block copolymer was obtained, and the concentration of the block copolymer in the glue solution was adjusted to 10wt%, wherein structural parameters of the block copolymer is shown in Table 2.

(2) Preparation of hydrogenated block copolymer

The hydrogenated block copolymer was prepared using the same method as Example 1, except that the structure and performance parameters of the hydrogenated block copolymer prepared by using the glue solution comprising the block copolymer prepared in step (1) of Example 11 are listed in Table 3.

Example 12

(1) Preparation of block copolymer

(1-1) 800 g of cyclohexane, 60 mg of tetrahydrofuryl ethyl ether (ETE), and 38 g of styrene were added in a 2

L of stainless steel stirring kettle, a temperature was raised to 50°C, 1.6 mmol of n-butyl lithium initiator was added, polymerization was performed at 50°C for 30 minutes to obtain a styrene homopolymer, and a conversion rate of styrene is more than 99%;
(1-2) the temperature of the stirring kettle was kept at 50°C, 6 g of isoprene was added to the stirring kettle, and reacted for 40 minutes, and a conversion rate of isoprene is more than 99%;
(1-3) the temperature of the stirring kettle was kept at 50°C, 30 g of butadiene and 22 g of styrene were added to the stirring kettle, and reacted for 40 minutes to achieve random copolymerization of butadiene and styrene, a conversion rate of butadiene is more than 99%, and a conversion rate of styrene is more than 99%;
(1-4) the temperature of the stirring kettle was kept at 50°C, 30 g of butadiene and 22 g of styrene were added to the stirring kettle, and reacted for 30 minutes to achieve random copolymerization of butadiene and styrene, a conversion rate of butadiene is more than 99%, and a conversion rate of styrene is more than 99%;
(1-5) the temperature of the stirring kettle was kept at 50°C, 92 g of styrene was added to the stirring kettle, and continued to react for 30 minutes, and a conversion rate of styrene is more than 99%; and
(1-6) 0.25 g of isopropanol was added to the stirring kettle, and the reaction was terminated at 50°C to obtain a block copolymer; an anti-aging agent 1076 was added to the obtained glue solution, the addition amount of the anti-aging agent 1076 was 1wt% of the total weight of monomers added in each reaction step; and after mixing for 10 minutes, a glue solution comprising the block copolymer was obtained, and the concentration of the block copolymer in the glue solution was adjusted to 10wt%, wherein structural parameters of the block copolymer is shown in Table 2.

(2) Preparation of hydrogenated block copolymer

The hydrogenated block copolymer was prepared using the same method as Example 1, except that the structure and performance parameters of the hydrogenated block copolymer prepared by using the glue solution comprising the block copolymer prepared in step (1) of Example 12 are listed in Table 3.

Example 13

The block copolymer was prepared using the same method as Example 1, and the block copolymer was subjected to a hydrogenation reaction to prepare a hydrogenated block copolymer, except that in step (2), the hydrogenation catalyst was replaced by equal weight of hydrogenation catalyst prepared in preparation example 2, and structure and performance parameters of the hydrogenated block copolymer prepared are listed in Table 3.

Example 14

The block copolymer was prepared using the same method as Example 1, and the block copolymer was subjected to a hydrogenation reaction to prepare a hydrogenated block copolymer, except that in step (2), the hydrogenation catalyst was replaced by equal weight of the hydrogenation catalyst prepared in preparation example 3, and structure and performance parameters of the hydrogenated block copolymer prepared are listed in Table 3.

Example 15

The block copolymer was prepared using the same method as Example 1, and the block copolymer was subjected to a hydrogenation reaction to prepare a hydrogenated block copolymer, except that in step (2), the hydrogenation catalyst was replaced by equal weight of the hydrogenation catalyst prepared in preparation example 4, and structure and performance parameters of the hydrogenated block copolymer prepared are listed in Table 3.

Example 16

The block copolymer was prepared using the same method as Example 1, and the block copolymer was subjected to a hydrogenation reaction to prepare a hydrogenated block copolymer, except that in step (2), the hydrogenation catalyst was replaced by equal weight of the hydrogenation catalyst prepared in preparation example 5, and structure and performance parameters of the hydrogenated block copolymer prepared are listed in Table 3.

Example 17

(1) Preparation of block copolymer

A seven-block copolymer was prepared using a method similar to Example 1, and a structure of the seven-block copolymer is S71-(S72/B71)-B72-(S73/B73)-B74-(S75/B75)-S76, wherein an S71 block and an S76 block were homopolymerization segments of styrene, an S72B71 block, an S73B73 block, and an S75B75 block are random copolymerization segments of styrene and butadiene, a B72 block is a homopolymerization segment of isoprene, and a B74 block is a homopolymerization segment of butadiene.

After measurement, based on the total amount of the seven-block copolymer, a content of a styrene structural unit is 75.2wt%, a content of a butadiene structural unit is 22.3wt%, a content of an isoprene structural unit is 2.5wt%, and a content of a styrene non-block is 18.1wt%; based on the total amount of a conjugated diene structural unit in the seven-block copolymer, a content of a side group is 48.4wt%; based on the total amount of a butadiene structural unit in the seven-block copolymer, a content of a 1,2-PB structural unit is 48.2wt%; and based on the total amount of an isoprene structural unit in the seven-block copolymer, a content of a 3,4-IP structural unit is 50. 1wt%, and no 1,2-IP structural unit was detected.

A number average molecular weight of the S71 block is 25000, a number average molecular weight of the S72/B71 block is 31000, a number average molecular weight of the B72 block is 4000, a number average molecular weight of the S73/B73 block is 33000, a number average molecular weight of the B74 block is 6000, a number average molecular weight of the S75/B75 block is 36000, and a number average molecular weight of the S76 block is 43000.

(2) Preparation of hydrogenated seven-block copolymer

The hydrogenation catalyst prepared in preparation example 1 was reduced to obtain a reduced catalyst, and the reduced catalyst was used for a hydrogenation reaction, wherein the reduction was performed in a hydrogen atmosphere at a temperature of 450°C and a duration of 10 hours.

In a 0.5 L of high-pressure reaction kettle with stirring, 200 g of glue solution comprising the seven-block copolymer prepared in step (1) and 0.5 g of reduced hydrogenation catalyst were added for a hydrogenation reaction, a reaction temperature was 150°C, a hydrogen pressure was 3 MPa, a reaction time was 2 hours, and a stirring speed was 600 rpm.

After the hydrogenation reaction was completed, products of the hydrogenation reaction were subjected to centrifugal separation to obtain a reaction mixture comprising the hydrogenated seven-block copolymer, the reaction mixture was filtered to separate the hydrogenation catalyst, and the separated hydrogenation catalyst was washed with n-hexane and vacuum dried before being recycled for the hydrogenation reaction. A liquid phase obtained by filtering was collected, and a solvent was removed to obtain a hydrogenated block copolymer according to the present disclosure. The structure parameters and performance parameters of the hydrogenated seven-block copolymer are listed in Table 3.

Example 18

(1) Preparation of block copolymer

A seven-block copolymer was prepared using a method similar to Example 1, and a structure of the seven-block copolymer is: S71-(S72/B71)-B72-(S73/B73)-B74-(S75/B75)-S76, wherein an S71 block and an S76 block were homopolymerization segments of styrene, an S72/B71 block, an S73/B73 block, and an S75/B75 block are random copolymerization segments of styrene and butadiene, a B72 block is a homopolymerization segment of isoprene, and a B74 block is a homopolymerization segment of butadiene.

After measurement, based on the total amount of the seven-block copolymer, a content of a styrene structural unit is 80.5wt%, a content of a butadiene structural unit is 16.7wt%, a content of an isoprene structural unit is 2.8wt%, and a content of a styrene non-block is 17.5wt%; based on the total amount of a conjugated diene structural unit in the seven-block copolymer, a content of a side group is 46.1wt%; based on the total amount of a butadiene structural unit in the seven-block copolymer, a content of a 1,2-PB structural unit is 45.6wt%; and based on the total amount of an isoprene structural unit in the seven-block copolymer, a content of a 3,4-IP structural unit is 48.5wt%, and no 1,2-IP structural unit was detected.

A number average molecular weight of the S71 block is 16000, a number average molecular weight of the S72/B71 block is 23000, a number average molecular weight of the B72 block is 3800, a number average molecular weight of the S73/B73 block is 25000, a number average molecular weight of the B74 block is 3600, a number average molecular weight of the S75/B75 block is 26000, and a number average molecular weight of the S76 block is 45000.

(2) Preparation of hydrogenated seven-block copolymer

The hydrogenation catalyst prepared in preparation example 1 was reduced to obtain a reduced catalyst, and the reduced catalyst was used for a hydrogenation reaction, wherein the reduction was performed in a hydrogen atmosphere at a temperature of 450°C and a duration of 10 hours.

In a 0.5 L of high-pressure reaction kettle with stirring, 200 g of glue solution comprising the block copolymer prepared in step (1) and 0.5 g of reduced hydrogenation catalyst were added for a hydrogenation reaction, a reaction temperature was 150°C, a hydrogen pressure was 3 MPa, a reaction time was 2 hours, and a stirring speed was 600 rpm.

After the hydrogenation reaction was completed, products of the hydrogenation reaction were subjected to centrifugal separation to obtain a reaction mixture comprising the hydrogenated seven-block copolymer, the reaction mixture was filtered to separate the hydrogenation catalyst, and the separated hydrogenation catalyst was washed with n-hexane and vacuum dried before being recycled for the hydrogenation reaction. A liquid phase obtained by filtering was collected, and a solvent was removed to obtain a hydrogenated block copolymer according to the present disclosure. The structure parameters and performance parameters of the hydrogenated seven-block copolymer are listed in Table 3.

Example 19

(1) Preparation of polystyrene

800 g of cyclohexane and 200 g of styrene were added in a 2 L of stainless steel stirring kettle, a temperature was raised to 50°C, 1.6 mmol of n-butyl lithium initiator was added, and polymerization was performed at 50°C for 50 minutes to obtain polystyrene.

(2) Preparation of hydrogenated polystyrene

The hydrogenation catalyst prepared in preparation example 1 was reduced to obtain a reduced catalyst, and the reduced catalyst was used for a hydrogenation reaction, wherein the reduction was performed in a hydrogen atmosphere at a temperature of 450°C and a duration of 2 hours.

In a 0.5 L of high-pressure reaction kettle with stirring, 200 g of glue solution comprising the polystyrene prepared in step (1) and 1 g of reduced hydrogenation catalyst were added for a hydrogenation reaction, a reaction temperature was 150°C, a hydrogen pressure was 3 MPa, a reaction time was 1 hour, and a stirring speed was 800 rpm.

After the hydrogenation reaction was completed, products of the hydrogenation reaction were subjected to centrifugal separation to obtain a reaction mixture comprising the hydrogenated polystyrene, the reaction mixture was filtered to separate the hydrogenation catalyst, and the separated hydrogenation catalyst was washed with n-hexane and vacuum dried before being recycled for the hydrogenation reaction, through measuring, after the hydrogenation catalyst is recycled for 5 times, its hydrogenation activity decay rate is within 2% (based on the hydrogenation activity at the first use). A liquid phase obtained by filtering was collected, and a solvent was removed to obtain hydrogenated polystyrene according to the present disclosure. The structure parameters of the hydrogenated polystyrene are listed in Table 3.

From the experimental results in Table 3, it can be seen that according to the hydrogenation method for the aromatic polymer of the present disclosure, not only can the aromatic polymer be effectively hydrogenated to obtain a high hydrogenation degree (with the hydrogenation degree of more than 95 mol%, and under optimal conditions, the hydrogenation degree may be close to 100 mol%), but also the molecular weight of the polymer has not decreased significantly before and after the hydrogenation reaction, indicating that the polymer has not undergone molecular chain degradation in the hydrogenation reaction process.

The hydrogenated block copolymer according to the present disclosure has high light transmittance and low haze, further has excellent impact strength while ensuring material transparency, and is suitable for fields such as packaging materials (especially packaging materials in the field of medical and health) and optoelectronic product materials (especially materials such as cameras and display screens of the optoelectronic products).

Table 2

| Item | Example 1 | Example 2 | Example 3 | Example 4 | Example 5 | Example 8 | Example 9 | Example 10 | Example 11 | Example 12 |
|---|---|---|---|---|---|---|---|---|---|---|
| S51 (Mn)/ $\times 10^5$ | 2.7 | 0.9 | 1.8 | 2.9 | 2.5 | 1.8 (S) | 1.8 (S) | 2.1 (1) | 2.7 | 2.7 |
| S52/B51 (Mn)/ $\times 10^5$ | 3.7 | 2.6 | 2.6 | 3.5 | 2.8 | 0.7 (B) | / | 3.5 | 3.7 | 4.3 (1) |
| B52 (Mn)/ $\times 10^5$ | 0.42 | 0.29 | 0.28 | 0.41 | 0.56 | 1.7 (S) | 1.4 (B) | 0.38 | 1.4 (S) | 3.9 (S/B) |
| S53/B53 (Mn)/ $\times 10^5$ | 3.9 | 2.5 | 2.49 | 3.7 | 2.7 | 0.63 (B) | 2.4 (S/B) | 3.8 | 4.2 | 4.1 |
| S54 (Mn)/ $\times 10^5$ | 6.6 | 5.3 | 4.4 | 6.1 | 6.2 | 4.3 (S) | 4.3 (S) | 6.5 | 6.5 | 6.5 |
| Styrene structural unit content/weight % | 72.5 | 72.3 | 80.3 | 72.3 (2-EMB and AMS) | 72.4 | 68.5 | 71.8 | 60.1 | 76.3 | 72.5 |
| Butadiene structural unit content/weight % | 25 | 25.7 | 17.4 | 25.1 | / | 31.5 | 28.2 | 24.9 | 23.7 | 25 |
| Isoprene structural unit content/ weight% | 2.5 | 2 | 2.3 | 2.6 | 27.6 | / | / | 15.0 | / | 2.5 |
| St non-block/ weight% | 18 | 17.8 | 18.5 | / | 17.8 | 0.9 | 9.4 | 18.1 | 18.3 | 18.2 |
| 1,2-PB/ weight% | 45.6 | 52.1 | 53.6 | 48.1 | / | 12.7 | 13.4 | 46.2 | 48.3 | 46.5 |
| 3,4-IP/ weight% | 52.1 | 55.9 | 56.3 | 51.6 | 50.7 | / | / | 50.1 | / | 50.2 |
| 1,2-IP/ weight% | Undetected | Undetected | Undetected | Undetected | Undetected | Undetected | Undetected | Undetected | Undetected | Undetected |

(continued)

| Item | Example 1 | Example 2 | Example 3 | Example 4 | Example 5 | Example 8 | Example 9 | Example 10 | Example 11 | Example 12 |
|---|---|---|---|---|---|---|---|---|---|---|
| Side group content/ weight% | 45.7 | 52.1 | 53.6 | 48.1 | 50.7 | 12.7 | 13.4 | 47.7 | 48.3 | 46.8 |

Note 1: A structure of the block copolymer prepared in Example 8 is S-B-S-B-S, a structure of the block copolymer prepared in Example 9 is S-B-S/B-S, a structure of the block copolymer prepared in Example 10 is I-S/B-I-S/B-S, a structure of the block copolymer prepared in Example 11 is S-S/B-S-S/B-S, and a structure of the block copolymer prepared in Example 12 is S-I-S/B-S/B-S, wherein B represents a butadiene homopolymerization segment, S represents a styrene homopolymerization segment, I represents an isoprene homopolymerization segment, and S/B represents a random copolymerization segment of styrene and butadiene.

Note 2: The content of the styrene structural unit, the content of the butadiene structural unit, and the content of the isoprene structural unit are based on the total amount of the block copolymer.

Note 3: The content of the side group is based on the total amount of the conjugated diene structural unit in the block copolymer, the 1,2-PB content is based on the total amount of the butadiene structural unit in the block copolymer, the 3,4-IP content is based on the total amount of the isoprene structural unit in the block copolymer, and the content of the St non-block is based on the total amount of the block copolymer.

Table 3

| Serial number | Aromatic Ring Hydrogenation degree/mol% | Conjugated Diene hydrogenation degree/mol% | Light transmittance /% (3mm) | Haze | Notched Impact strength/kJ/$m^2$ | Elongation at break/% | Vicat Softening point/ °C | Mn (before hydrogenation) /ten thousand | Mw/Mn (before hydrogenation) | Mn (after hydrogenation) /ten thousand | Mw/Mn (after hydrogenate n) | Degradation rate/% | Molecular Weight distribution broadening coefficient/% |
|---|---|---|---|---|---|---|---|---|---|---|---|---|---|
| Example 1 | 100 | 100 | 91.6 | 1.3 | 23.5 | 320 | 125 | 17.3 | 1.12 | 17.29 | 1.12 | 0.06 | 0.00 |
| Example 2 | 99.9 | 100 | 91.2 | 1.3 | 21.6 | 270 | 117 | 11.6 | 1.15 | 11.6 | 1.15 | 0.00 | 0.00 |
| Example 3 | 99.9 | 100 | 91.3 | 1.5 | 22.7 | 260 | 121 | 11.6 | 1.13 | 11.57 | 1.12 | 0.26 | -0.88 |
| Example 4 | 98 | 100 | 91.0 | 1.7 | 21.0 | 256 | 115 | 16.6 | 1,12 | 16.2 | 1.13 | 2.41 | 0.89 |
| Example 5 | 98.1 | 100 | 91.0 | 1.6 | 21.3 | 260 | 114 | 14.7 | 1.15 | 14.5 | 1.15 | 1.36 | 0.00 |
| Comparative Example 1 | 85.1 | 95.1 | 88.7 | 4.3 | 16.3 | 112 | 87 | 17.3 | 1.12 | 15.1 | 1.35 | 12.72 | 20.54 |
| Comparative Example 2 | 80.0 | 93.5 | 87.1 | 5.45 | 15.1 | 123 | 83 | 17.3 | 1.12 | 16.8 | 1.15 | 2.89 | 2.68 |
| Comparative Example 3 | 92.1 | 96.5 | 88.9 | 4.7 | 16.5 | 120 | 91 | 17.3 | 1.12 | 17.1 | 1.13 | 1.16 | 0.89 |
| Example 6 | 95.2 | 97.6 | 89.1 | 3.6 | 17.1 | 131 | 97 | 17.3 | 1.12 | 17.2 | 1.12 | 0.58 | 0.00 |
| Example 7 | 97.5 | 98.0 | 89.7 | 3.2 | 17.4 | 138 | 102 | 17.3 | 1.12 | 17.23 | 1.12 | 0.40 | 0.00 |
| Example 8 | 99.9 | 100 | 91.0 | 2.3 | 17.6 | 150 | 115 | 9.1 | 1.13 | 9.08 | 1.15 | 0.22 | 1.77 |
| Example 9 | 99.9 | 100 | 91.2 | 2.2 | 18.2 | 175 | 117 | 9.9 | 1.17 | 9.8 | 1.17 | 1.01 | 0.00 |
| Example 10 | 100 | 100 | 86.7 | 6.2 | 22.5 | 270 | 115 | 16.3 | 1.12 | 16.26 | 1.13 | 0.25 | 0.89 |
| Example 11 | 99.9 | 100 | 89.2 | 2.3 | 17.3 | 156 | 116 | 18.5 | 1.13 | 18.47 | 1.13 | 0.16 | 0.00 |
| Example 12 | 99.9 | 100 | 89.7 | 2.1 | 18.1 | 135 | 114 | 17.8 | 1.12 | 17.78 | 1.12 | 0.11 | 0.00 |
| Example 13 | 99.8 | 100 | 91.5 | 1.3 | 23.0 | 308 | 125 | 17.3 | 1.12 | 17.1 | 1.12 | 1.16 | 0.00 |
| Example 14 | 99.6 | 100 | 91.4 | 1.5 | 22.8 | 289 | 123 | 17.3 | 1.12 | 17.2 | 1.13 | 0.58 | 0.89 |
| Example 15 | 99.6 | 100 | 91.2 | 1.3 | 21.0 | 280 | 125 | 17.3 | 1.12 | 17.1 | 1.13 | 1.16 | 0.89 |

(continued)

| Serial number | Aromatic Ring Hydrogenation degree/mol% | Conjugated Diene hydrogenation degree/mol% | Light transmittance /% (3mm) | Haze | Notched Impact strength/kJ/$m^2$ | Elongation at break/% | Vicat Softening point/°C | Mn (before hydrogenation) /ten thousand | Mw/Mn (before hydrogenation) | Mn (after hydrogenation) /ten thousand | Mw/Mn (after hydrogenate n) | Degradation rate/% | Molecular Weight distribution broadening coefficient/% |
|---|---|---|---|---|---|---|---|---|---|---|---|---|---|
| Example 16 | 98 | 100 | 90.8 | 1.7 | 21.0 | 267 | 116 | 17.3 | 1.12 | 17.0 | 1.13 | 1.73 | 0.89 |
| Example 17 | 99.6 | 100 | 91.1 | 1.3 | 22.3 | 286 | 126 | 18.4 | 1.13 | 18.38 | 1.13 | 0.11 | 0.00 |
| Example 18 | 99.5 | 100 | 90.8 | 1.5 | 21.6 | 279 | 123 | 13.5 | 1.13 | 13.47 | 1.13 | 0.22 | 0.00 |
| Example 19 | 100 | / | / | / | / | / | / | 15.2 | 1.05 | 15.18 | 1.05 | 0.13 | 0.00 |

Note: light transmittance/% (3 mm) represents a light transmittance of a hydrogenated monovinyl aromatic hydrocarbon polymer sample with an average thickness of 3 mm. Degradation rate=[(number average molecular weight before hydrogenation - number average molecular weight after hydrogenation)/number average molecular weight before hydrogenation] × 100%

The preferred embodiments of the present disclosure are described in detail above, but the present disclosure is not limited to this. Within the scope of the technical concept of the present disclosure, various simple variations can be made to the technical solution of the present disclosure, including the combination of various technical features in any other suitable way. These simple variations and combinations should also be considered as disclosed content of the present disclosure, all of which belong to the scope of protection of the present disclosure.

## Claims

1. A hydrogenation method for an aromatic polymer, the aromatic polymer comprising aromatic rings, and the method comprising: contacting the aromatic polymer with a hydrogenation reagent in the presence of a hydrogenation catalyst so as to hydrogenate at least part of aromatic rings in the aromatic polymer and obtain a hydrogenated aromatic polymer, wherein
   the hydrogenation catalyst comprises a carrier and a platinum element, a group IVA element and a rare earth metal element supported on the carrier, the carrier is alumina, and in the hydrogenation catalyst, by elements, a molar ratio of the group IVA element to the platinum element is not higher than 10.

2. The method according to claim 1, wherein in the hydrogenation catalyst, by elements, the molar ratio of the group IVA element to the platinum element is not higher than 8;

   preferably, in the hydrogenation catalyst, by elements, the molar ratio of the group IVA element to the platinum element is not lower than 1;
   more preferably, in the hydrogenation catalyst, by elements, the molar ratio of the group IVA element to the platinum element is (3-7):1; and
   preferably, the group IVA element is tin.

3. The method according to claim 1 or 2, wherein in the hydrogenation catalyst, by elements, a molar ratio of the rare earth metal element to the platinum element is (1-6):1, preferably (1.5-5):1; and preferably, the rare earth metal element is cerium.

4. The method according to any one of claims 1 to 3, wherein the hydrogenation catalyst further comprises an alkali metal element and an alkaline earth metal element;

   preferably, in the hydrogenation catalyst, by elements, a molar ratio of the alkali metal element to the platinum element is (7-20):1;
   preferably, in the hydrogenation catalyst, by elements, a molar ratio of the alkaline earth metal element to the platinum element is (10-35):1; and
   preferably, the alkali metal element is potassium; and preferably, the alkaline earth metal element is magnesium.

5. The method according to any one of claims 1 to 4, wherein the hydrogenation catalyst further comprises a group IVB metal element, a halogen group element, or a combination thereof;

   preferably, in the hydrogenation catalyst, by elements, a molar ratio of the group IVB metal element to the platinum element is (2-10):1, preferably (4-6): 1;
   preferably, in the hydrogenation catalyst, by elements, a molar ratio of the halogen group element to the platinum element is (2-8): 1, preferably (4-6):1; and
   preferably, the group IVB metal element is zirconium; and preferably, the halogen group element is chlorine.

6. The method according to any one of claims 1 to 5, wherein based on the total amount of the hydrogenation catalyst, a content of the platinum element is in a range from 0.1wt% to 0.8wt%, preferably in a range from 0.2wt% to 0.8wt%.

7. The method according to any one of claims 1 to 6, wherein the alumina is $\gamma$- alumina; and
   preferably, a specific surface area of the hydrogenation catalyst is in a range from 100 $m^2/g$ to 400 $m^2/g$, preferably in a range from 200 $m^2/g$ to 350 $m^2/g$; and an average pore size of the hydrogenation catalyst is in a range from 5 nm to 40 nm, preferably in a range from 10 nm to 20 nm.

8. The method according to any one of claims 1 to 7, wherein based on the total amount of the aromatic polymer, a content of an aromatic structural unit derived from an aromatic monomer with the aromatic ring in the aromatic

polymer is 40wt% or higher, preferably 50wt% or higher, and more preferably 70wt% or higher;

preferably, based on the total amount of the aromatic polymer, a content of the aromatic structural unit in the aromatic polymer is in a range from 65wt% to 85wt%;
preferably, the aromatic structural unit is a monovinyl aromatic hydrocarbon structural unit derived from a monovinyl aromatic hydrocarbon, and the monovinyl aromatic hydrocarbon is one or more than two selected from the group consisting of compounds shown in formula I,

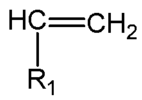
(Formula I)

In formula I, Ri is a substituted or unsubstituted aryl from $C_6$ to $C_{20}$;
preferably, the monovinyl aromatic hydrocarbon is one or more than two selected from the group consisting of styrene, vinyl toluene, α-methyl styrene, 4-*tert* butyl styrene, 4-methyl styrene, 3,5-diethylstyrene, 3,5-di-n-butyl styrene, 4-n-propylstyrene, and 4-dodecylstyrene; and
more preferably, the monovinyl aromatic hydrocarbon is one or more than two selected from the group consisting of styrene, 2-methyl styrene, 4-methyl styrene, and α-methyl styrene.

**9.** The method according to any one of claims 1 to 8, wherein the aromatic polymer comprises a conjugated diene structural unit derived from conjugated diene;

preferably, based on the total amount of the aromatic polymer, a content of the conjugated diene structural unit is not higher than 60wt%;
more preferably, based on the total amount of the aromatic polymer, a content of the conjugated diene structural unit is in a range from 10wt% to 50wt%;
further preferably, based on the total amount of the aromatic polymer, a content of the conjugated diene structural unit is in a range from 15wt% to 35wt%;
preferably, the conjugated diene is butadiene, isoprene, or a combination thereof; and
preferably, in the aromatic polymer, a conjugated diene hydrogenation degree is 97 mole% or higher, preferably 99 mole% or higher.

**10.** The method according to any one of claims 1 to 9, wherein the aromatic polymer comprises at least two homopolymerization segments of monovinyl aromatic hydrocarbon, at least one homopolymerization segment of conjugated diene, and at least two random copolymerization segments of the monovinyl aromatic hydrocarbon and the conjugated diene, two end-blocks of the aromatic polymer are each independently homopolymerization segment of the monovinyl aromatic hydrocarbon, blocks directly bonded to the end-blocks is inner-blocks, and the inner-blocks are each independently the random copolymerization segment of the monovinyl aromatic hydrocarbon and the conjugated diene;

preferably, based on the total amount of the aromatic polymer, the content of the monovinyl aromatic hydrocarbon structural unit derived from the monovinyl aromatic hydrocarbon is in a range from 40wt% to 95wt%, the content of the conjugated diene structural unit derived from the conjugated diene is in a range from 5wt% to 60wt%, and the content of the monovinyl aromatic hydrocarbon structural unit derived from the monovinyl aromatic hydrocarbon in the random copolymerization segment is in a range from 15wt% to 20wt%; and
preferably, in the aromatic polymer, based on the total amount of the conjugated diene structural unit, a content of a side group is in a range from 40wt% to 60wt%.

**11.** The method according to any one of claims 1 to 9, wherein the aromatic polymer is one or more than two selected from the group consisting of a five-block copolymer with a structure shown in formula II and a seven-block copolymer with a structure shown in formula III:

S51-(S52/B51)-B52-(S53/B53)-S54 (Formula II)

in formula II, an S51 block and an S54 block are each independently homopolymerization segment of the monovinyl aromatic hydrocarbon;
an S52/B51 block and an S53/B53 block are each independently random copolymerization segment of the

monovinyl aromatic hydrocarbon and the conjugated diene,
a B52 block is a homopolymerization segment of the conjugated diene;
preferably, the conjugated diene in the B52 block is isoprene, and the conjugated diene in the B51 block and the conjugated diene in the B53 block are butadiene;
preferably, a number average molecular weight of the S51 block is in a range from 5000 to 50000, and a ratio of the number average molecular weight of the S51 block to a number average molecular weight of the S54 block is 1:(2-10); a number average molecular weight of the S52/B51 block is in a range from 20000 to 50000, and a ratio of the number average molecular weight of the S52/B51 block to a number average molecular weight of the S53/B53 block is 1:(0.9-1.25); and a number average molecular weight of the B52 block is in a range from 2000 to 20000;

S71-(S72/B71)-B72-(S73/B73)-B74-(S75/B75)-S76 (Formula III)

in formula III, an S71 block and an S76 block are each independently homopolymerization segment of the monovinyl aromatic hydrocarbon;
an S72/B71 block, an S73/B73 block and an S75/B75 block are each independently random copolymerization segment of the monovinyl aromatic hydrocarbon and the conjugated diene,
a B72 block and a B74 block are each independently homopolymerization segment of the conjugated diene;
preferably, the conjugated diene in the B72 block is isoprene, and the conjugated diene in the B71 block, the conjugated diene in the B73 block and the conjugated diene in the B75 block are butadiene;
preferably, a number average molecular weight of the S71 block is in a range from 5000 to 50000, and a ratio of the number average molecular weight of the S71 block to a number average molecular weight of the S76 block is 1:(1.5-5); a number average molecular weight of the S72/B71 block is in a range from 20000 to 50000, and a ratio of the number average molecular weight of the S72/B71 block to a number average molecular weight of the S73/B73 block to a number average molecular weight of the S75/B75 block is 1:(1-1.2):(1-1.25); and a number average molecular weight of the B572 block is in a range from 2000 to 20000, and a ratio of the number average molecular weight of the B72 block to a number average molecular weight of the B74 block is 1:(0.9-1.2).

**12.** The method according to any one of claims 1 to 11, wherein a contact temperature is in a range from 50°C to 200°C, preferably in a range from 120°C to 150°C; and
preferably, compared to 100 parts by weight of aromatic polymers, the use amount of the hydrogenation catalyst is in a range from 1 part by weight to 20 parts by weight, preferably in a range from 2 parts by weight to 10 parts by weight, and more preferably in a range from 2.5 parts by weight to 5 parts by weight.

**13.** The method according to any one of claims 1 to 12, wherein the hydrogenation reagent is hydrogen; and
preferably, a pressure of the hydrogen is in a range from 0.1 MPa to 10 MPa, preferably in a range from 0.5 MPa to 5 MPa, and the pressure is a gauge pressure.

**14.** The method according to any one of claims 1-13, wherein an aromatic ring hydrogenation degree is 95 mole% or higher, preferably 97 mole% or higher, more preferably 98 mole% or higher, further preferably 99 mole% or higher, and more preferably 100 mole%; and
preferably, a number average molecular weight of the aromatic polymer is $M_n1$, a number average molecular weight of the hydrogenated aromatic polymer is $M_n2$, $[(M_n1 - M_n2)/ M_n1] \times 100\%$ is defined as a degradation rate, and the degradation rate is not higher than 2.5%, preferably not higher than 1.5%, more preferably not higher than 1%, further preferably not higher than 0.5%, further preferably not higher than 0.3%, and particularly preferably not higher than 0.1%.

**15.** A hydrogenated aromatic polymer prepared by the method according to any one of claims 1 to 14.

**16.** A hydrogenated block copolymer, comprising a monovinyl aromatic hydrocarbon structural unit derived from monovinyl aromatic hydrocarbon and a conjugated diene structural unit derived from conjugated diene, wherein in the hydrogenated block copolymer, a hydrogenation degree of an aromatic ring in the monovinyl aromatic hydrocarbon structural unit is 98 mole% or higher, a hydrogenation degree of unsaturated double bonds in the conjugated diene structural unit is 99 mole% or higher, a notched impact strength of the hydrogenated block copolymer is in a range from 20 $kJ/m^2$ to 30 $kJ/m^2$, an elongation at break is in a range from 200% to 400%, a light transmittance is in a range from 88% to 92%, and a haze is in a range from 1 to 5.

**17.** The hydrogenated block copolymer according to claim 16, wherein a vicat softening point of the hydrogenated block copolymer is in a range from 110°C to 150°C.

**18.** The hydrogenated block copolymer according to claim 16 or 17, wherein the block copolymer comprises at least two homopolymerization segments of monovinyl aromatic hydrocarbon, at least one homopolymerization segment of conjugated diene, and at least two random copolymerization segments of the monovinyl aromatic hydrocarbon and the conjugated diene, two end-blocks of the block copolymer are each independently homopolymerization segment of the monovinyl aromatic hydrocarbon, blocks directly bonded to the end blocks is inner-blocks, and the inner-blocks are each independently the random copolymerization segment of the monovinyl aromatic hydrocarbon and the conjugated diene.

**19.** The hydrogenated block copolymer according to any one of claims 16 to 18, wherein based on the total amount of the block copolymer, a content of the monovinyl aromatic hydrocarbon structural unit derived from the monovinyl aromatic hydrocarbon is in a range from 40wt% to 95wt%, a content of the conjugated diene structural unit derived from the conjugated diene is in a range from 5wt% to 60wt%, and a content of the monovinyl aromatic hydrocarbon structural unit derived from the monovinyl aromatic hydrocarbon in the random copolymerization segment is in a range from 15wt% to 20wt%; and preferably, in the block copolymer, based on the total amount of the conjugated diene structural unit, a content of a side group is in a range from 40wt% to 60wt%.

**20.** The hydrogenated block copolymer according to any one of claims 16 to 19, wherein the block copolymer comprises the at least three random copolymerization segments of the monovinyl aromatic hydrocarbon and the conjugated diene and at least two homopolymerization segments of the conjugated diene, and the homopolymerization segment of the conjugated diene is arranged at intervals with the random copolymerization segment of the monovinyl aromatic hydrocarbon and the conjugated diene.

**21.** The hydrogenated block copolymer according to any one of claims 16 to 20, wherein the homopolymerization segment of the conjugated diene comprises a homopolymerization segment of a first conjugated diene and at least one homopolymerization segment of a second conjugated diene, a structural unit in the homopolymerization segment of the first conjugated diene is derived from the first conjugated diene, a structural unit in the homopolymerization segment of the second conjugated diene is derived from the second conjugated diene, and the first conjugated diene is different from the second conjugated diene.

**22.** The hydrogenated block copolymer according to any one of claims 16 to 21, wherein the homopolymerization segment of the first conjugated diene is directly bonded to one inner-block, the first conjugated diene is isoprene, and the second conjugated diene and the conjugated diene in the random copolymerization segment of the monovinyl aromatic hydrocarbon and the conjugated diene is butadiene; and
preferably, based on the total amount of the block copolymer, a content of a structural unit derived from isoprene is preferably in a range from 0.5wt% to 10wt%, and a content of a structural unit derived from butadiene is preferably in a range from 5wt% to 40wt%.

**23.** A hydrogenated five-block copolymer, wherein the five-block copolymer is a five-block copolymer with a structure shown in formula II:

S51-(S52/B51)-B52-(S53/B53)-S54 (Formula II)

in formula II, an S51 block and an S54 block are each independently homopolymerization segment of monovinyl aromatic hydrocarbon;
an S52/B51 block and an S53/B53 block are each independently random copolymerization segment of the monovinyl aromatic hydrocarbon and conjugated diene,
a B52 block is a homopolymerization segment of the conjugated diene; and
in the hydrogenated five-block copolymer, a hydrogenation degree of an aromatic ring in a monovinyl aromatic hydrocarbon structural unit is 98 mole% or higher, and a hydrogenation degree of an unsaturated double bond in a conjugated diene structural unit is 99 mole% or higher.

**24.** The hydrogenated five-block copolymer according to claim 23, wherein the conjugated diene structural unit in the B52 block is derived from B52 conjugated diene, the conjugated diene structural unit in the S52/B51 block is derived from B51 conjugated diene, the conjugated diene structural unit in the S53/B53 block is derived from B53 conjugated diene, the B52 conjugated diene is isoprene, and the B51 conjugated diene and the B53 conjugated diene are

butadiene;

preferably, based on the total amount of the five-block copolymer, a content of an isoprene structural unit derived from isoprene is in a range from 5wt% to 20wt%, and a content of a butadiene structural unit derived from butadiene is preferably in a range from 5wt% to 40wt%; and
preferably, based on the total amount of the isoprene structural unit derived from isoprene in the five-block copolymer, a content of an isoprene structural unit with vinyl side group is in a range from 50wt% to 60wt%; and based on the total amount of the structural unit derived from butadiene in the five-block copolymer, a content of the butadiene structural unit with vinyl side group is in a range from 40wt% to 60wt%.

**25.** The hydrogenated five-block copolymer according to claim 23 or 24, wherein the monovinyl aromatic hydrocarbon is one or more than two selected from the group consisting of compounds shown in formula I,

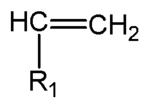

(Formula I)

In formula I, Ri is a substituted or unsubstituted aryl from $C_6$ to $C_{20}$;
preferably, the monovinyl aromatic hydrocarbon is one or more than two selected from the group consisting of styrene, 2-methyl styrene, 4-methyl styrene, and $\alpha$-methyl styrene.

**26.** The hydrogenated five-block copolymer according to any one of claims 23 to 25, wherein a number average molecular weight of the S51 block is in a range from 5000 to 50000, and a ratio of the number average molecular weight of the S51 block to a number average molecular weight of the S54 block is 1:(2-10); a number average molecular weight of the S52/B51 block is in a range from 20000 to 50000, a ratio of the number average molecular weight of the S52/B51 block to a number average molecular weight of the S53/B53 block is 1:(0.9-1.25), and a number average molecular weight of the B52 block is in a range from 2000 to 20000; and preferably, a number average molecular weight of the hydrogenated block copolymer is in a range from 50000 to 220000.

**27.** A hydrogenated seven-block copolymer, wherein the seven-block copolymer is a seven-block copolymer with a structure shown in formula III:

S71-(S72/B71)-B72-(S73/B73)-B74-(S75/B75)-S76 (Formula III)

in formula III, an S71 block and an S76 block are each independently homopolymerization segment of the monovinyl aromatic hydrocarbon;
an S72/B71 block, an S73/B73 block and an S75/B75 block are each independently random copolymerization segment of the monovinyl aromatic hydrocarbon and the conjugated diene,
a B72 block and a B74 block are each independently homopolymerization segment of the conjugated diene; and in the hydrogenated seven-block copolymer, a hydrogenation degree of an aromatic ring in a monovinyl aromatic hydrocarbon structural unit is 98 mole% or higher, and a hydrogenation degree of an unsaturated double bond in a conjugated diene structural unit is 99 mole% or higher.

**28.** The hydrogenated seven-block copolymer according to claim 27, wherein the conjugated diene structural unit in the B72 block is derived from B72 conjugated diene, the conjugated diene structural unit in the S72/B71 block is derived from B71 conjugated diene, the conjugated diene structural unit in the S73/B73 block is derived from B73 conjugated diene, the conjugated diene structural unit in the S75B75 block is derived from B75 conjugated diene, the B72 conjugated diene is isoprene, and the B71 conjugated diene, the B73 conjugated diene and the B75 conjugated diene are butadiene;

preferably, based on the total amount of the seven-block copolymer, a content of an isoprene structural unit derived from isoprene is in a range from 0.5wt% to 10wt%, and a content of a butadiene structural unit derived from butadiene is preferably in a range from 5wt% to 40wt%; and
preferably, based on the total amount of the isoprene structural unit derived from isoprene in the seven-block copolymer, a content of an isoprene structural unit with vinyl side group is in a range from 40wt% to 60wt%; and based on the total amount of the butadiene structural unit derived from butadiene in the seven-block copolymer, a content of the butadiene structural unit with vinyl side group is in a range from 40wt% to 60wt%.

**29.** The hydrogenated seven-block copolymer according to claim 27 or 28, wherein the monovinyl aromatic hydrocarbon is one or more than two selected from the group consisting of compounds shown in formula I,

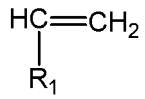

(Formula I)

In formula I, Ri is a substituted or unsubstituted aryl from $C_6$ to $C_{20}$;
preferably, the monovinyl aromatic hydrocarbon is one or more than two selected from the group consisting of styrene, 2-methyl styrene, 4-methyl styrene, and $\alpha$-methyl styrene.

**30.** The hydrogenated seven-block copolymer according to any one of claims 27 to 29, wherein a number average molecular weight of the S71 block is in a range from 5000 to 50000, and a ratio of the number average molecular weight of the S71 block to a number average molecular weight of the S76 block is 1:(1.5-5); a number average molecular weight of the S72/B71 block is in a range from 20000 to 50000, a ratio of the number average molecular weight of the S72/B71 block to a number average molecular weight of the S73/B73 block to a number average molecular weight of the S75/B75 block is 1:(1-1.2):(1-1.25), a number average molecular weight of the B72 block is in a range from 2000 to 20000, and a ratio of the number average molecular weight of the B72 block to a number average molecular weight of the B74 block is 1:(0.9-1.2); and preferably, a number average molecular weight of the hydrogenated seven-block copolymer is in a range from 50000 to 200000.

**31.** Use of the hydrogenated block copolymer according to any one of claims 16 to 22, the hydrogenated five-block copolymer according to any one of claims 23 to 26, or a hydrogenated seven-block copolymer according to any one of claims 27 to 30 in preparation of a packaging material or an optoelectronic product.

**INTERNATIONAL SEARCH REPORT**

International application No. **PCT/CN2022/092764**

**A. CLASSIFICATION OF SUBJECT MATTER**

C08F 8/04(2006.01)i; C08F 297/04(2006.01)i

According to International Patent Classification (IPC) or to both national classification and IPC

**B. FIELDS SEARCHED**

Minimum documentation searched (classification system followed by classification symbols)

C08F

Documentation searched other than minimum documentation to the extent that such documents are included in the fields searched

Electronic data base consulted during the international search (name of data base and, where practicable, search terms used)

CNTXT, ENTXT, CNABS, VEN: 芳香族, 芳族, 嵌段, 氢化, 加氢, 铂, 稀土, 铈, 锡, aromatic, block, hydrogenation, platinum, Pt, rare, earth, terrae, cerium, Ce, stannum, tin, Sn

**C. DOCUMENTS CONSIDERED TO BE RELEVANT**

| Category* | Citation of document, with indication, where appropriate, of the relevant passages | Relevant to claim No. |
|---|---|---|
| X | CN 111087560 A (CHINA PETROLEUM & CHEMICAL CORP. et al.) 01 May 2020 (2020-05-01)<br>embodiments, and table 7 | 16-31 |
| X | CN 111087496 A (CHINA PETROLEUM & CHEMICAL CORP. et al.) 01 May 2020 (2020-05-01)<br>embodiments, and table 7 | 16-31 |
| A | CN 1276389 A (SOUTH CHINA UNIVERSITY OF TECHNOLOGY) 13 December 2000 (2000-12-13)<br>entire document | 1-31 |
| A | CN 1844178 A (SINOPEC BALING PETROCHEMICAL CO., LTD.) 11 October 2006 (2006-10-11)<br>entire document | 1-31 |
| A | US 2002150715 A1 (DOW CHEMICAL CO.) 17 October 2002 (2002-10-17)<br>entire document | 1-31 |
| A | WO 2009079044 A2 (DOW GLOBAL TECHNOLOGIES INC. et al.) 25 June 2009 (2009-06-25)<br>entire document | 1-31 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 August 2022** | **17 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/092764**

**C. DOCUMENTS CONSIDERED TO BE RELEVANT**

| Category* | Citation of document, with indication, where appropriate, of the relevant passages | Relevant to claim No. |
|---|---|---|
| A | JP 11349626 A (ASAHI CHEMICAL INDUSTRY et al.) 21 December 1999 (1999-12-21) entire document | 1-31 |

Form PCT/ISA/210 (second sheet) (January 2015)

**INTERNATIONAL SEARCH REPORT**
**Information on patent family members**

International application No.
**PCT/CN2022/092764**

| Patent document cited in search report | | | Publication date (day/month/year) | Patent family member(s) | | | Publication date (day/month/year) |
|---|---|---|---|---|---|---|---|
| CN | 111087560 | A | 01 May 2020 | None | | | |
| CN | 111087496 | A | 01 May 2020 | None | | | |
| CN | 1276389 | A | 13 December 2000 | None | | | |
| CN | 1844178 | A | 11 October 2006 | None | | | |
| US | 2002150715 | A1 | 17 October 2002 | AU | 2002227142 | A8 | 24 June 2002 |
| | | | | DE | 60112122 | D1 | 25 August 2005 |
| | | | | WO | 0248211 | A2 | 20 June 2002 |
| | | | | AU | 2714202 | A | 24 June 2002 |
| | | | | JP | 2004515616 | A | 27 May 2004 |
| | | | | BR | 0116685 | A | 02 March 2004 |
| | | | | EP | 1349880 | A2 | 08 October 2003 |
| | | | | CN | 1481397 | A | 10 March 2004 |
| WO | 2009079044 | A2 | 25 June 2009 | TW | 200932355 | A | 01 August 2009 |
| JP | 11349626 | A | 21 December 1999 | JP | H11349626 | A | 21 December 1999 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202110560968X
- US 5700878 A


### Non-patent literature cited in the description


- **ELIAS H G ; ETTER O.** Glass Temperature of Hydrogenated Polystyrene. *Journal of Macromolecular Science-Chemistry,* 1967, vol. 1 (5), 943-953
- **MD GEHLSEN ; WEIMANN P A ; BATES F S et al.** Synthesis and Characterization of Poly(vinylcyclohexane) Derivatives. *Journal of Polymer Science Part B Polymer Physics,* 1995, vol. 33 (10), 1527-1536
- **ZHOU HONGYONG et al.** Preparation of Magnetic Nano-Ruthenium Catalyst and Catalytic Performance for Catalytic Hydrogenation of Polystyrene. *Polymer Material Science and Engineering,* 2011, vol. 27 (011), 73-76